(19) Europäisches Patentamt
European Patent Office
Office européen des brevets

(11) **EP 2 931 814 B1**

## (12) EUROPEAN PATENT SPECIFICATION

(45) Date of publication and mention
of the grant of the patent:
**12.08.2020 Bulletin 2020/33**

(21) Application number: **13862161.0**

(22) Date of filing: **12.12.2013**

(51) Int Cl.:
*C08L 91/06* (2006.01)    *A01N 25/00* (2006.01)
*C09D 5/16* (2006.01)     *A01N 27/00* (2006.01)
*A01N 29/00* (2006.01)    *C08K 5/02* (2006.01)
*A01P 1/00* (2006.01)

(86) International application number:
**PCT/IL2013/051025**

(87) International publication number:
**WO 2014/091489 (19.06.2014 Gazette 2014/25)**

### (54) USE OF HYDROPHOBIC AND OLEOPHOBIC SURFACES

VERWENDUNG VON HYDROPHOBEN UND OLEOPHOBEN OBERFLÄCHEN

UTILISATION DES SURFACES HYDROPHOBES ET OLÉOPHOBES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **13.12.2012 US 201261736652 P**

(43) Date of publication of application:
**21.10.2015 Bulletin 2015/43**

(73) Proprietors:
• **Technion Research & Development Foundation
Ltd.
3200004 Haifa (IL)**
• **The State of Israel, Ministry of Agriculture &
Rural Development, Agricultural Research
Organization (ARO) (Volcani Center)
7528809 Rishon-LeZion (IL)**

(72) Inventors:
• **POKROY, Boaz
3478610 Haifa (IL)**
• **PECHOOK, Sasha
3215901 Haifa (IL)**
• **SHEMESH, Moshe
7174635 Modiln (IL)**

(74) Representative: **Dennemeyer & Associates S.A.
Postfach 70 04 25
81304 München (DE)**

(56) References cited:

WO-A1-98/18605        WO-A1-2005/123851
WO-A2-01/53209        WO-A2-01/53209
WO-A2-2007/025293     WO-A2-2009/126916
AU-A1- 2008 201 617   CA-A1- 2 260 470
US-A- 3 345 202       US-A1- 2011 250 422

• **SASHA PECHOOK ET AL: "Bioinspired passive
anti-biofouling surfaces preventing biofilm
formation", JOURNAL OF MATERIALS
CHEMISTRY B, vol. 3, no. 7, 1 January 2015
(2015-01-01) , pages 1371-1378, XP055265223,
GB ISSN: 2050-750X, DOI: 10.1039/C4TB01522C**
• **A. K. EPSTEIN ET AL: "From the Cover:
Liquid-infused structured surfaces with
exceptional anti-biofouling performance",
PROCEEDINGS OF THE NATIONAL ACADEMY
OF SCIENCES, vol. 109, no. 33, 14 August 2012
(2012-08-14), pages 13182-13187, XP055043847,
ISSN: 0027-8424, DOI: 10.1073/pnas.1201973109**
• **W. P. Zhang ET AL: "Epitaxial growth and crystal
structure analysis of perfluorotetracosane",
MACROMOLECULES, vol. 23, no. 19, 1
September 1990 (1990-09-01), pages 4322-4326,
XP055602003, WASHINGTON, DC, UNITED
STATES ISSN: 0024-9297, DOI:
10.1021/ma00221a021**

Remarks:
The file contains technical information submitted after
the application was filed and not included in this
specification

**Description**

The present disclosure, in some aspects thereof, relates to material science and, more particularly, but not exclusively, to hydrophobic, superhydrophobic, oleophobic and superoleophobic surfaces, processes of preparing same and uses thereof in, for example, inhibiting biofilm formation.

Surfaces with special wettability characteristics have broad application in industrial production, daily life and basic research area. Therefore, in recent years, the preparation of superhydrophobic/superoleophobic surfaces has attracted considerable attention.

Superhydrophobicity is a physical property of a surface whereby the surface is extremely resistant to wetting by water, typically displaying water contact angles (W.C.A) higher than 150 °, and low contact angle hysteresis.

Superhydrophobic traits have been attributed, for example, to leaves of plants, insect wings, or the wings of birds, resulting in the ability to remove any external contaminants without requiring any specific removal process and/or to prevent contamination in the first place. In many cases, the superhydrophobicity characteristic enables plants to reduce water loss, and reduce the adhesion of pathogens. Furthermore, it has been shown that the natural waxes, which are located on the surface of the cuticle, can exhibit several different morphological forms such as platelets, tubules, rodlets, threads, and others. These epicuticular waxes have a hierarchical roughness which, combined with their intrinsic hydrophobic characteristics, results in superhydrophobic qualities that exist on the leaves' surface. In this respect, the lotus leaf has become an icon for superhydrophobicity due to the unique surface chemistry originated from epidermal cells of waxy hydrophobic crystals. It has been found that the lotus leaf surface is covered with micrometer-sized papillae decorated with nanometer branchlike protrusions. Apart from this unique hierarchical morphology, the roughness of the hydrophobic convex cell papillae reduces the contact area between the surface and a liquid drop, with droplets residing only on the tips of the epicuticular wax crystals on the top of papillose epidermal cells. That is, the water repellency stems from the synergy of dual-length-scale roughness and hydrophobic surface chemistry.

Thus, it has been recognized that in order to achieve a superhydrophobic surface, two factors have to be fulfilled; one is a geometric factor, according to which increasing the surface roughness causes an increase in the hydrophobicity of the surface because air can be trapped in the fine structures and thus reduces the contact area between the liquid and the surface; and the other is surface chemistry, according to which the more hydrophobic are the chemical moieties on the surface, the more superhydrophobic is the surface.

Based on the understandings of natural superhydrophobic surfaces several techniques and methodologies have been studied, for constructing artificial advanced materials. Such a "bioinspired approach" of designing novel materials involves the transformation of the ideas, concepts, and underlying principles developed by nature into manmade technology.

Bioinspired superhydrophobic properties are desirable for many applications. These include a directed liquid flow in microfluidic devices, antifouling in biomedical applications, and transparent coatings in photovoltaic devices, just to name a few. Superhydrophobic properties also help limit or even prevent the accumulation of contaminants on the surface of insulators, which can produce a conductive layer when wet, which in turn might lead to an increase in leakage currents, dry band arcing, and ultimately flashover. Due to the self-cleaning properties of the surfaces, the contamination that is deposited on the surface can be easily picked up by water droplets falling or condensed on the surface.

A variety of methods have been developed to produce hydrophobic surfaces with nanoscale roughness, so as to achieve superhydrophobicity. These methods include, for example, the fabrication of polymer nanofibers and densely packed aligned carbon nanotube films combined with fluoroalkylsilane coating, solidification of melted alkylketene dimmer, anodic oxidation of aluminum with fluoroalkyltrimethoxysilane, immersion of porous alumina gel films in boiling water, mixing of a sublimation material with silica particles, and treating the fluorinated polymer film with different plasma techniques [Irzh et al. 2011, ACS Appl. Mater. Interfaces. 3, 4566].

US 2010/0028604 teaches a formation of superhydrophobic structure. The superhydrophobic structure comprises a substrate and a hierarchical surface structure disposed on at least one surface of the substrate. The nanostructure was formed by self assembly of *Tropaeolum* and *Leymus* waxes with a crystal growth on the surface utilizing a thermal evaporation method.

US 2009/0011222 teaches a method of preparing superhydrophobic inorganic coatings of improved hydrophobicity which is stable under harsh multi-factor aging environments such as salt, moisture, and high temperature. The methodology disclosed in this patent application involves a sol-gel technology in which hydrophobic sol-gel precursors are gelled on a substrate.

Onda et al. [Langmuir 1996, 12, 2125-2127] have devised a method for rendering glass and metal surfaces superhydrophobic that is based upon smearing a molten alkylketendimer (AKD, a wax usable as a sizing agent for papers) on a substrate surface, followed by crystallization.

US 2011/0059307 teaches a method of preparing superhydrophobic surfaces by means of rapid expansion solutions of wax film or substances containing long saturated hydrocarbon chains.

Bhushan et al. [2009, Phil. Trans. R. Soc. A 367, 1631] have used thermal evaporation of *n*-hexatriacontane

($C_{36}H_{74}$) and showed that it produces superhydrophobic surfaces. Bhushan *et al.* disclose a methodology that combines thermal evaporation of *n*-hexatriacontane with micropatterned epoxy replicas as substrates so as to gain several orders of hierarchy, which increased the superhydrophobicity of the surface. Bioinspired structures in which wax crystals have been employed as a single means for achieving both desired functionalities, namely, roughness and hydrophobicity, have also been reported.

Koch et al. [2009, Soft Matter. 5, 1386] extracted natural waxes from the leaf of wheat and grew crystals of these waxes mainly from solution, but also by thermal evaporation, on different surfaces. Such waxy surfaces were shown to exhibit high roughness, similar to that which was observed in the biological counterpart.

Pechook and Pokroy [2012, Adv. Funct. Mater. 22, 745] have showed that the nanoroughness of wax surfaces formed by thermally-evaporated n-hexatriacontane evolves in time via self-assembly and this leads to a dramatic change in the wetting properties with a transition from hydrophobic to superhydrophobic characteristics.

Oleophobicity is a physical property of a surface whereby the surface is characterized as oil repellant, typically displaying oil contact angles (O.C.A) higher than 90°.

Oleophobicity is also dependent on surface roughness and chemistry, yet is exhibited only in surfaces that have extremely low surface tension. While superhydrophobicity relates to resistance to wetting by water, superhydrophobic surfaces are typically not characterized as oil repellent, and hence are typically not considered as oleophobic surfaces, let alone as superoleophobic surfaces.

Fabricating oleophobic surfaces is a difficult task to achieve because of the necessary force for impeding the natural spreading of low surface tension. The low-surface-energy chemicals used in superhydrophobic surfaces usually have similar surface energies to those of the oil (hydrocarbon materials) drops. In order to design oleophobic surfaces, minimizing the surface energy of the solid substrate is required. Furthermore, surface roughness should be generated in order to enhance the surface's oleophobicity and achieve superoleophobicity.

It has been recognized that for a smooth oleophobic surface to have an equilibrium contact angle higher than 90° with a liquid alkane, as an example, the surface should have a surface energy lower than 5 mN/m. It has been reported that surface free energy decreased in the order $-CH_2 > -CH_3 > -CF_2 > -CF_2H > -CF_3$, and the lowest solid surface energies reported to date are in the range of about 6 mN/m for a hexagonally closed pack arrangement of $-CF_3$ groups on a surface [Tuteja et al. 2007, Science, 318, 1618]. Oleophobic surfaces can therefore be achieved by using a high surface concentration of fluoroalkyl groups, including $-CF_2$ and $-CF_3$ moieties, preferably in a high ratio of $-CF_3$ groups with respect to the $CF_2$ groups.

To date, there are several methodologies for producing oleophobic surfaces, all combine at least two production steps, including, for example, electrospinning of a PMMA polymer mixed with pre-synthesized fluorinated molecules, plasma deposition in continuous mode of fluorocarbons, combination of intricate surface lithography and surface coating and others. These methods are high cost, complex and are limited to small scale production processes.

US 2011/0250422 teaches coatings that include a silica matrix having hydrophobic and/or oleophobic pores that include at least one alkyl and/or at least one fluoroalkyl functional group encapsulated therein. According to the teachings of this patent application, fluorinated silica films are synthesized at room temperature *via* co-condensation of fluorinated silane with an alkoxide silica precursor in the presence of a surfactant.

US 2009/0191397 teaches a method of preparing an oleophobic layer on a fluoropolymer, which involves formation of an aqueous oleophobic treatment composition by mixing a solvent, water, and a fluoroalkyl acrylate copolymer; casting the aqueous oleophobic treatment composition on the fluoropolymer; and drying and curing the aqueous oleophobic treatment composition.

Bacterial attachment to surfaces leading to the formation of communities of bacterial cells is a major problem in many diverse settings. This sessile community of microorganisms, also termed a biofilm, is attached to an interface, or to each other, and embedded in an exopolymeric matrix. It manifests an altered growth rate and transcribes genes that free-living microorganisms do not transcribe. The most characteristic phenotype of the biofilm mode of growth is its inherent resistance to antimicrobial treatment and immune response killing. Medical implants and indwelling devices are especially prone to bacterial colonization and biofilm formation, and removal of the infected device is required in such cases due to the ineffectiveness of conventional antibiotic therapy against device-associated biofilm organisms. It has been estimated that the number of implant-associated infections approaches 1 million/year in the US alone, and their direct medical costs exceed $3 billion annually (R. O. Darouiche, Preventing infection in surgical implants, US Surgery, 2007, 40, www.touchbriefings.com/ pdf/2742/darouiche.pdf).

The inherent resistance of biofilms to killing and their pervasive involvement in implant-related infections has prompted research in the area of biocidal surfaces/coatings. Such anti-biofilm coatings may also be in use for various industrial applications such as drinking water distribution systems and food packaging.

The potential benefits of superhydrophobic surfaces/coatings have been considered in preventing these bacterial accumulations from forming biofilm. Yang et al. [in J. Colloid Interface Sci. 2008, 325, 588] developed a method for preparing a superhydrophobic paper surface, and have reported that superhydrophobicity is strongly related to antibacterial property. Khalil-Abad et al. [in J. Colloid Interface Sci. 2008, 351, 293] also reported that superhydrophobic paper products, made of wood fibers, have shown a high resistance to bacterial contamination. Epstein et al. [in Proc. Natl. Acad. Sci. 2012, 109 (33) 13182] described the use of certain perfluoropolyethers (Krytox 100 and 103) or perfluorodecalin (perfluorinated hydrocarbon) to impart hydrophobicity and oleophobicity to a surface for inhibiting biofilm formation.

Jung and Bhushan [Langmuir 2009, 25(24), 14165-14173] have studied the wetting behavior of water and oil droplets for hydrophobic/hydrophilic and oleophobic/oleophilic surfaces in three-phase interfaces. Oleophobic surfaces were fabricated from materials having a surface energy lower than that of oil, such as *n*-perfluoroeicosane, and the wetting behavior of flat and micropatterned surfaces with varying pitch values were studied.

WO 2007/025293 describes acid-derivatized perfluoropolyethers materials usable for coating various substrates.

WO 98/18605 and EP Patent No, 0952904, which is derived therefore teach razor blades coated with a polyfluorocarbon, prepared while using a fluorinated solvent such as, for example, perfluorotetracosane, that removes some of the coating. The polyfluorocarbons used for coating the razor blade are taught to be of high molecular weight of about 50,000. The fluorinated solvent, according to the teachings of these documents, should be different from the polyfluorocarbon coating, since the solvents should be capable of dissolving the polymer at a temperature below its boiling point and below the melting point of the polymer.

U.S. Patent No. 3,345,202 teaches PTFE-coated razor blades.

WO 2009/126916 describes a process of producing spatially patterned structures which utilizes a fluorinated material as a barrier layer deposited on a first layer, which acts as a sacrificial protecting layer during the patterning process. Such fluorinated materials include short-chain and long-chain fluorinated hydrocarbons, as well as fluorinated polymeric materials such as, for example, perfluorotetracosane, perfluoropentadecane, perfluoroeicosane, perfluorododecane, perfluorocyclohexane, CYTOP, TEFLON, and other fluorinated polymers. Zhang et al. [in Macromolecules 1990, 23 (19) 4322] described NaCl and KCl substrates on which perfluorotetracosane was deposited.

Additional background art includes WO 01/53209, which describes treatment of an aqueous medium by introducing to the medium 1,3-dibromo-5,5-dimethylhyndatoin, which can be in a particulate form or as a compacted body which further comprises a binder such as a wax; WO 2005/123851, which describes an antifouling agent which is an extract of *Sargassum* and lists active ingredients which are contained in such an extract, including, for example, hexadecane, octadecane and eicosane; and AU 2008/201617, which describes treatment of shellfish using a pre-treatment agent and an anti-fouling composition that is a mixture of at least three types of wax: microcrystalline wax, paraffin wax and hydrocarbon natural wax.

SUMMARY OF THE INVENTION

The present invention relates to a method of inhibiting, reducing and/or retarding a biofilm formation on a surface, the method comprising applying onto certain surfaces a fluorinated hydrocarbon, said fluorinated hydrocarbon being perfluorotetracosane ($CF_3(CF_2)_{22}CF_3$).

The surface preferably has at least one of:

a static liquid contact angle for a hydrophobic liquid of at least 50°; and

an RMS roughness which is at least 5-folds the RMS roughness of said surface prior to applying thereon said fluorinated hydrocarbon.

Described is also a process of preparing the composition, the process comprising applying said fluorinated hydrocarbon onto said surface of said substrate, thereby obtaining the composition of matter.

Preferably, said applying is performed by spraying a mixture of said fluorinated hydrocarbon and a fluorinated organic solvent onto said surface; by dipping said surface in a mixture of said fluorinated hydrocarbon and a fluorinated organic solvent; or by thermally evaporating said fluorinated hydrocarbon onto said surface of said substrate.

Preferably, said applying is performed by thermally evaporating said fluorinated hydrocarbon onto said surface, the process further comprising, subsequent to said evaporating, maintaining the composition of matter at a temperature that ranges from -30 °C to 90 °C.

More specifically, the invention relates to a method of inhibiting, reducing and/or retarding a biofilm formation on a surface of a substrate, the method comprising applying onto the surface a fluorinated hydrocarbon, said fluorinated hydrocarbon is perfluorotetracosane ($CF_3(CF_2)_{22}CF_3$), and said surface being selected from a glass surface, a porcelain surface, a ceramic surface, a polymeric surface, a metallic surface, and a surface which comprises silicon, an organosilicon, stainless steel, MICA, a polymer or any combination thereof.

Preferably, said biofilm is a bacterial biofilm.

BRIEF DESCRIPTION OF THE DRAWINGS

Some aspects of the disclosure are herein described, by way of example only, with reference to the accompanying drawings. With specific reference now to the drawings in detail, it is stressed that the particulars shown are by way of example and for purposes of illustrative discussion of aspects of the disclosure. In this regard, the description taken with the drawings makes apparent to those skilled in the art how aspects of the disclosure may be practiced.

In the drawings:

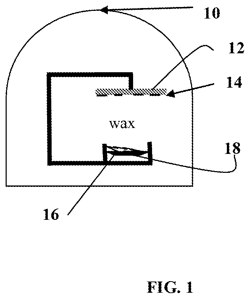

FIG. 1 presents schematic illustration of an exemplary thermal evaporation system according to some aspects of the present disclosure.

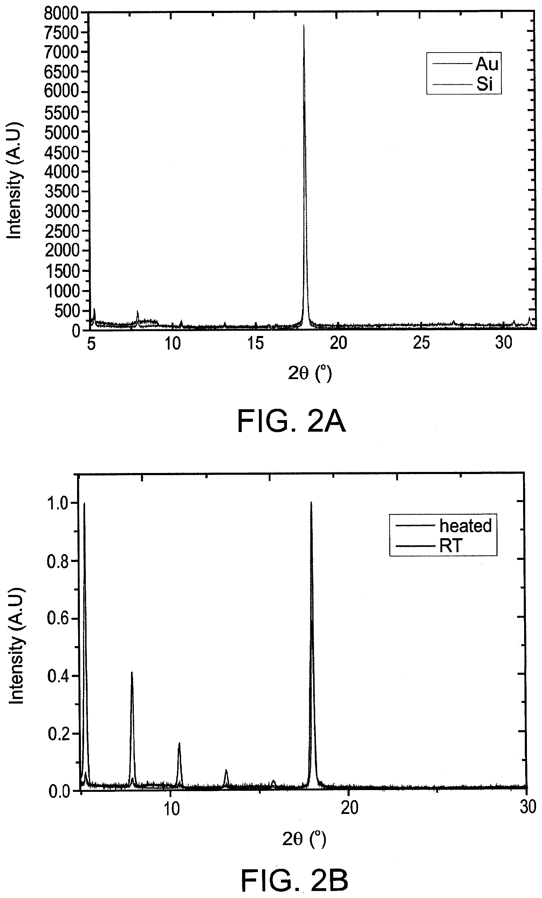

FIGs. 2A-C present comparative XRD spectra of Si substrate (red) and Au substrate ((gold films deposited on Si wafer; black) having $CF_3(CF_2)_{22}CF_3$ ($C_{24}F_{50}$) thermally evaporated thereon, demonstrating a strongly preferred orientation at 2 theta of 18° for both substrates (FIG. 2A), and comparative XRD spectra of Si substrate upon thermally evaporating $CF_3(CF_2)_{22}CF_3$ ($C_{24}F_{50}$) thereon, and maintaining the sample at room temperature (red) and at 90 °C for 30 hours, demonstrating a shift in the preferred orientation upon maintaining at elevated temperature (FIG. 2B). FIG. 2C presents XRD spectra of Si, Au and glass substrates having paraffin ($C_{36}H_{74}$), an exemplary non-substituted hydrocarbon according to some aspects of the present disclosure, thermally evaporated thereon, demonstrating the same strongly preferred orientation for all tested substrates.

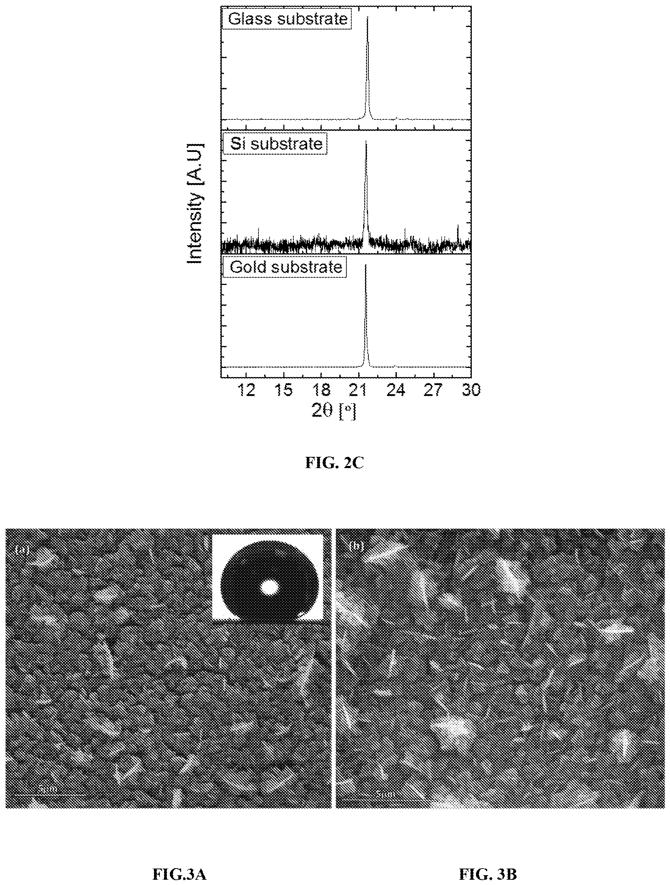

FIGs. 3A-B present HR-SEM images of a silicon surface (FIG. 3A) and a Au surface (gold films deposited on Si wafer; FIG. 3B) upon thermally evaporating thereon $CF_3(CF_2)_{22}CF_3$ and maintaining the samples at room temperature for 48 hours; and of a contact angle measurement of an olive oil drop on the $CF_3(CF_2)_{22}CF_3$-coated silicon surface (FIG. 3A, insert).

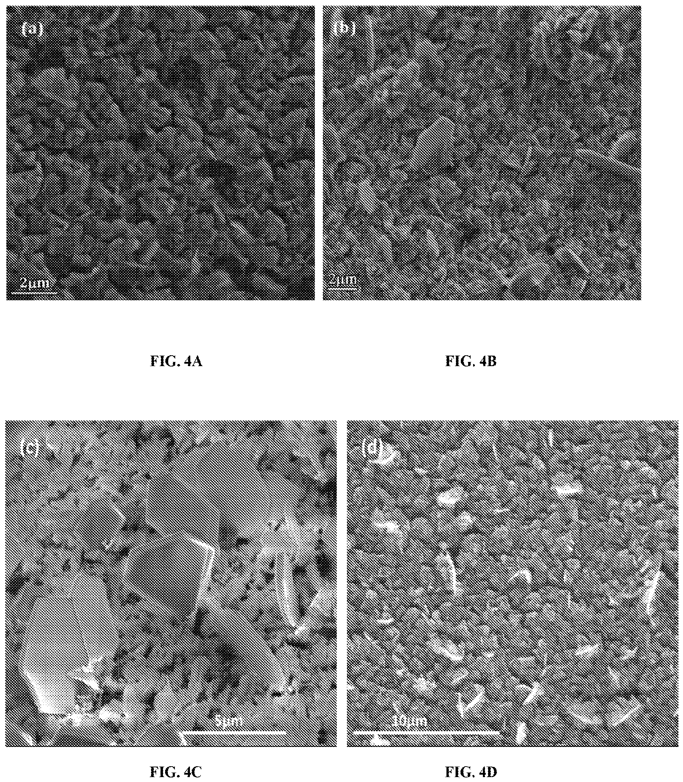

FIGs. 4A-D present HR-SEM images of a silicon surface upon thermally evaporating thereon $CF_3(CF_2)_{22}CF_3$ and maintaining the sample at 90 °C for 40 hours, taken at a tilt angle of 0° (FIG. 4A) and of 40° (FIG. 4B), and upon maintaining the sample at 70 °C for 30 hours (FIG. 4C) and at room temperature (FIG. 4D).

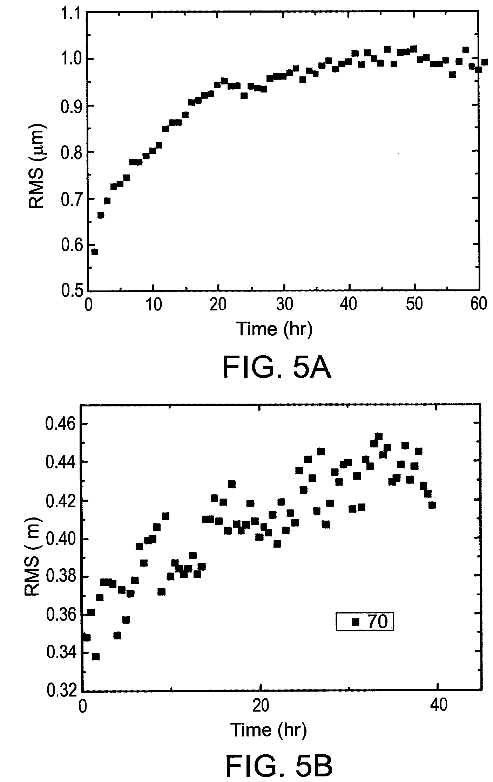

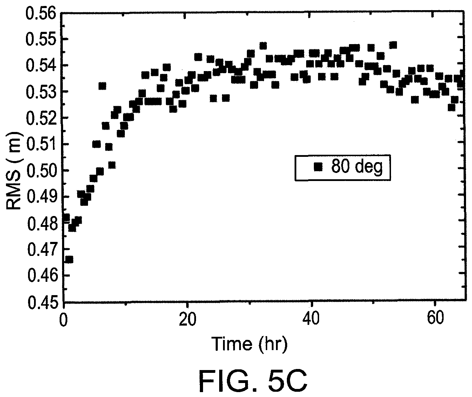

FIGs. 5A-C are graphs presenting the time-dependent RMS roughness of a silicon substrate upon thermally evaporating thereon an exemplary fluorinated wax, $CF_3(CF_2)_{22}CF_3$, and maintaining the sample at 90 °C (FIG. 5A), 70 °C (FIG. 5B) and 80 °C (FIG. 5C), as measured by confocal microscopy during 40-60 hours post deposition.

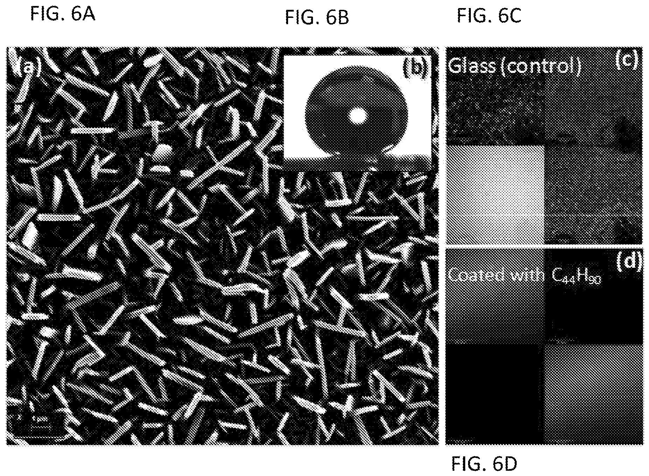

FIGs. 6A-D present SEM images of a gold surface having thermally-evaporated $C_{36}H_{74}$ applied thereon, maintained at room temperature for a week (FIG. 6A); of a contact angle measurement of a water drop on the $C_{36}H_{74}$-coated surface, presenting a contact angle of 165° (FIG. 6B); and CSLM (confocal scanning laser microscopy) images of *B. cereus* 407 biofilms formed on uncoated glass substrate (control; FIG. 6C) and on $C_{36}H_{74}$-coated glass substrate (FIG. 6D).

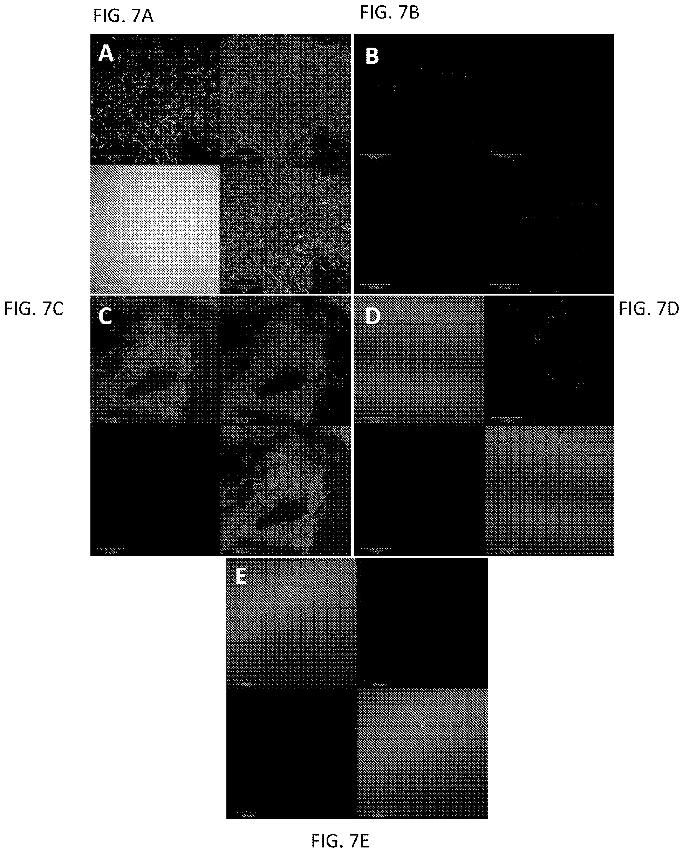

FIGs. 7A-E present CSLM (confocal scanning laser microscopy) images of *B. cereus* 407 biofilms formed on uncoated glass substrate (control; FIG. 7A) and on a glass substrate having thermally-evaporated $CF_3(CF_2)_{22}CF_3$ (FIG. 7B), $C_{36}H_{74}$ (FIG. 7C), $C_{40}H_{82}$ (FIG. 7D) and $C_{44}H_{90}$ (FIG. 7E) deposited thereon.

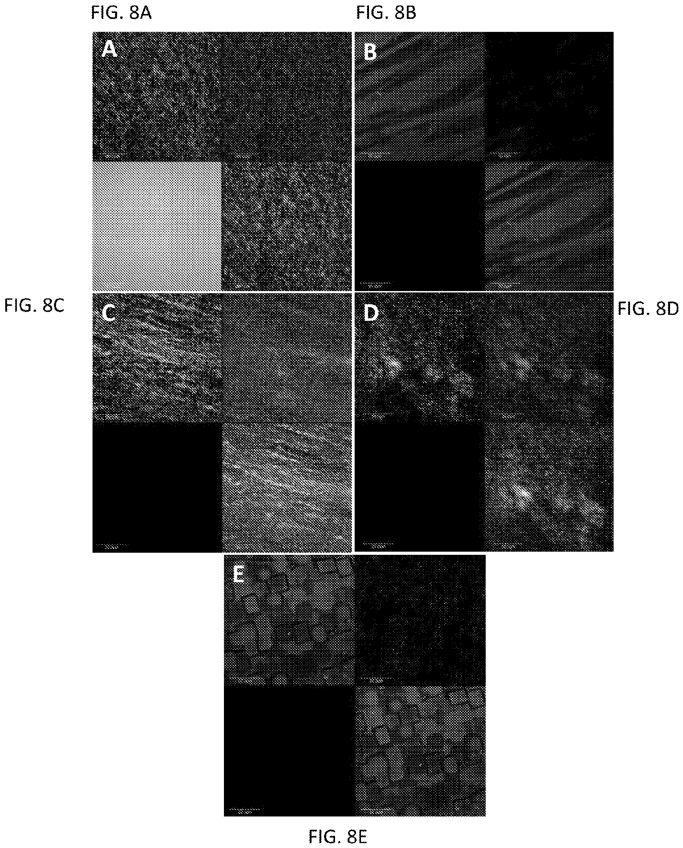

FIGs. 8A-E present CSLM images of *P. aeruginosa* biofilm generated formed on uncoated glass substrate (control; FIG. 8A) and on a glass substrate having thermally-evaporated $CF_3(CF_2)_{22}CF_3$ (FIG. 8B), $C_{36}H_{74}$ (FIG. 8C), $C_{40}H_{82}$ (FIG. 8D) and $C_{44}H_{90}$ (FIG. 8E) deposited thereon.

DESCRIPTION OF SPECIFIC ASPECTS OF THE DISCLOSURE

The present disclosure, in some aspects thereof, relates to material science and, more particularly, but not exclusively, to hydrophobic, superhydrophobic, oleophobic and superoleophobic surfaces, processes of preparing same and uses thereof in, for example, inhibiting biofilm formation.

As discussed hereinabove, currently known methodologies of preparing oleophobic surfaces is a difficult task to achieve because of the necessary force for impeding the natural spreading of low surface tension.

While conceiving the present disclosure, the present inventors have considered employing a one-step production route for providing both the roughness and chemical properties required for generating oleophobic surfaces.

While reducing the present disclosure to practice, the present inventors have devised and successfully prepared and practiced oleophobic surfaces, which are based on thermally-evaporated fluorinated waxes such as, for example, perfluorotetracosane ($CF_3(CF_2)_{22}CF_3$). The present inventors have demonstrated that such films exhibit high degree of oleophobicity.

As demonstrated in the Examples section that follows, thermal evaporation of fluorinated waxes on variable substrates (e.g., silicon, glass, gold, etc.) resulted in deposition of crystalline films of the fluorinated wax on the substrate's surface. As exemplified in Figures 3A and 3B, the film is comprised of an array of single crystal platelets of the fluorinated wax, each platelet having a size of about 100-150 nm, thus generating the required roughness. As exemplified in Figures 2A and 2B, the deposited film exhibits a highly preferred orientation.

As further demonstrated in the Examples section that follows, RMS roughness measurements have showed a substantial increase in the roughness of the surface upon fluorinated wax deposition, compared to non-treated substrates. The coated surfaces' roughness was found to increase over time, particularly when coated samples were kept at elevated temperatures (e.g., 70-90 °C).

As further demonstrated in the Examples section that follows, films formed on variable substrates by thermal evaporation of fluorinated waxes exhibited a high degree of oleophobicity, demonstrated as the surface's wettability by chemically versatile hydrophobic and/or oily liquids. The high degree of oleophobicity of the obtained surfaces was not observed in surfaces having deposited thereon non-fluorinated waxes and fluorinated waxes having a hydrocarbon backbone of 20 carbon atoms or less. The high degree of oleophobicity did not change significantly with time, when maintained both at room temperature, at elevated temperatures (e.g., 70-90 °C) and at lower temperatures (e.g., -30 °C).

As further demonstrated in the Examples section that follows, the present inventors have also demonstrated that fluorinated and non-fluorinated hydrocarbon waxes can be deposited on various surfaces by spray coating or dip coating methodologies, and that such methodologies result in hydrophobic surfaces, having a water contact angle higher than 50°, higher than 70°, higher than 100° and even higher than 130°.

As used herein and in the art, the expressions "hydrophobic", "hydrophobicity" and grammatical diversions thereof, refer to a property reflected by water repellency. The degree of hydrophobicity is typically and acceptably determined by contact angle measurements of water or aqueous solutions, or of amphiphilic liquid substances (e.g., glycerol and alkylene glycols), as is further detailed hereinbelow.

Typically, a substrate's surface is considered hydrophobic when it exhibits a static water contact angle of at least 90° with water. A substrate's surface is considered superhydrophobic when it exhibits a static water contact angle of at least 150° with water.

As used herein and in the art, the expressions "oleophobic", "oleophobicity" and grammatical diversions thereof, refer to a property reflected by oil repellency. The degree of oleophobicity is typically and acceptably determined by contact angle measurements of non-aqueous liquids, including amphiphilic liquid substances (e.g., glycerol and alkylene glycols), hydrophobic liquid substances (e.g., organic substances such as long-chain alkanes, cycloalkyls, aryls, and the like) and oily substances (e.g., natural and synthetic oils such as, for example, olive oil), as is further detailed hereinbelow.

Typically, a substrate's surface is considered oleophobic when it exhibits a static contact angle of at least 50° with a hydrophobic or oily liquid, as defined herein. In some aspects, a surface is considered oleophobic when it exhibits a static contact angle of at least 90° with a hydrophobic or oily liquid, or a static contact angle that ranges from 90° to 150° with a hydrophobic or oily liquid.

Typically, a substrate's surface is considered superoleophobic when it exhibits a static contact angle higher than 150 ° with a hydrophobic or oily liquid, as defined herein.

Hereinthroughout, the expression "substrate having applied (or deposited) on a surface thereof a (thermally-evaporated) (fluorinated) wax" is also referred to herein, for simplicity, as a coated substrate, a coated surface, a coated sample, a substrate or surface having a film deposited thereon, and as varying combination of the above expressions, and all of these expressions are referred to herein interchangeably.

*The wax:*

Hereinthroughout, the term "wax" describes natural, isolated and/or synthetically prepared wax substance.

As is known in the art, waxes are a class of organic compounds that are malleable near ambient temperatures. Waxes are typically solid at room temperature and melt above 45 °C to give a low viscosity liquid. Waxes typically consist of long alkyl chains. Natural waxes are typically composed of esters of fatty acids and long chain alcohols. Synthetic waxes are typically long-chain hydrocarbons lacking functional groups.

Herein, the terms "wax" is also referred to interchangeably as comprising a carbon backbone chain of more than 10, preferably more than 15 or more than 20 carbon atoms, as further defined and discussed hereinafter.

In some aspects, for any of the aspects described herein, the wax is an organic compound as defined herein.

In some aspects, for any of the aspects described herein, the wax is an organic compound which comprises a carbon backbone chain of more than 10 or more than 15 or more than 20 carbon atoms, optionally interrupted and/or terminated by functional groups such as heteroatoms, carboxylates, hydroxyls, amides, amides, and the like.

In some aspects, for any of the aspects described herein, the wax is an organic compound which comprises long alkyl chains (e.g., of more than 10, or more than 15 or more than 20 carbon atoms), whereby the alkyl can optionally be substituted.

In some aspects, the wax comprises, or consists of, non-substituted alkyl chains and can be referred to as a hydrocarbon.

As used herein, the term "hydrocarbon" describes an organic substance having a backbone chain composed of carbon atoms linked to one another, and substituted by hydrogen atoms.

In some aspects, a hydrocarbon as described herein comprises more than 10 carbon atoms in the backbone chain thereof. In some aspects, the hydrocarbon comprises 11, 12, 13, 14, 15, 16, 17, 18, 19, 20, 21, 22, 23, 24, 25, 26, 27, 28, 29, 30, 32, 34, 36, 38, 40, 42, 44, 46, 48, 50, and even more carbon atoms in its backbone chain, including any value therebetween.

The backbone chain of a hydrocarbon can be linear, branched and/or cyclic. The hydrocarbon can be saturated or unsaturated.

A representative general formula for linear saturated hydrocarbons is $C_nH_{2n+2}$, wherein n is an integer. In some aspects, n is greater than 10. In some aspects, n is greater than 20. In some aspects, n is greater than 30, and can be, 31, 32, 33, 34, 35, 36, 37, 38, 39, 40, 41, 42, 43, 44, 46, 47, 48, 49, 50 or higher.

As used herein, the term "unsubstituted (or non-substituted) hydrocarbon" describes a linear or branched, saturated or unsaturated hydrocarbon, as defined herein, that has no atoms other than hydrogen and carbon atoms.

In some aspects, the linear hydrocarbon has at least 10 carbon atoms in its backbone. In some aspects, the linear hydrocarbon has at least 20 carbon atoms in its backbone. In some aspects, the linear hydrocarbon has at least 30 carbon atoms in its backbone. In some aspects, the linear hydrocarbon has at least 40 carbon atoms in its backbone.

Exemplary linear hydrocarbons include, but are not limited to, $C_{36}H_{74}$, $C_{40}H_{82}$, $C_{44}H_{90}$ and $C_{50}H_{102}$ Such waxes are also referred to as "paraffin wax".

As used herein, the term "substituted hydrocarbon" or "substituted wax" describes a linear or branched, saturated or unsaturated hydrocarbon, as defined herein, wherein one or more of the hydrogen atoms is substituted by another chemical moiety or group.

Optional substituents of a substituted hydrocarbon or a substituted wax suitable for use in the context of aspects of the present disclosure include, but are not limited to, alkyls, cycloalkyls and aryls (forming branched hydrocarbons), each optionally being substituted, halides, amines, carboxylates, amides, carbamates, nitro, cyano, azide, hydroxyl, thiols, alkoxy, thioalkoxy, aryloxy, thioaryloxy, sulfonates, phosphonates, hydrazines, sulfonamides, etc., as defined herein.

In some aspects, the wax is a fluorinated wax (also referred to herein as a fluorinated hydrocarbon).

As used herein, term "fluorinated wax" describes an organic compound as described herein for wax (including any and all of the aspects described herein for wax), which has a carbon backbone chain as described herein, whereby one or more of the backbone carbon atoms has one or more fluoride substituent(s).

In some aspects, at least 10 percents of the carbon atoms in the carbon backbone chain bear one or more fluoride substituents, as feasible.

Fluorinated waxes can be, for example, fluorinated hydrocarbons, as defined herein, namely, made of long alkyl chain substituted by fluoride atoms as described herein.

In some aspects, a fluorinates wax is a compound which comprises a carbon backbone chain of more than 10 carbon atoms, more than 11, more than 12, more than 13, or more than 14 (e.g., of at least 15 carbon atoms), or more than 15, or more than 16, or more than 17, or more than 18, or more than 19 or more than 20 carbon atoms (e.g., of at least 21 carbon atoms).

Alternatively, fluorinated wax can be a wax compound, as defined herein (e.g., comprised of a carbon backbone chain of more than 10, 11, 12, 13, 14, 15, 16, 17, 18, 19 or 20, preferably more than 20, carbon atoms, optionally interrupted and/or terminated by functional groups such as heteroatoms, carboxylates, hydroxyls, amides, amides, and the like), in which one or more of the backbone carbon atoms is substituted by one or more fluoride substituents, as feasible.

As used herein, the term "fluorinated hydrocarbon" describes a hydrocarbon wherein at least one of the carbon atoms of a hydrocarbon, as defined herein, is substituted by one or more fluoride substituents, as feasible. For saturated hydrocarbons, a carbon atom within the backbone chain can be substituted by one or two fluorides, and carbon atoms at a terminus of the backbone can be substituted b y 1 to 3 fluorides.

In some aspects, at least 10 percents of the carbon atoms of a hydrocarbon are substituted by one or more fluoride atoms, as feasible.

In some aspects, at least 20 percents, at least 30 percents, at least 40 percents, at least 50 percents, at least 60 percents, at least 70 percents, at least 80 percents, at least 90 percents, and optionally all of the backbone carbon atoms of a fluorinated hydrocarbon or a fluorinated wax are substituted by one or more fluorides, as feasible, including any integer therebetween.

In some aspects, at least 10, 20, 30, 40, 50, 60, 70, 80, 90 percents or all of the backbone carbon atoms of a fluorinated hydrocarbon or a fluorinated wax are substituted by more than one fluorides (2 or 3 fluorides, as feasible), including any integer therebetween.

In some aspects, a fluorinated wax or hydrocarbon has more than 10, 11, 12, 13, 14, 15, 16, 17, 18, 19 or 20, preferably more than 20, carbon atoms in its backbone chain, as defined herein. In some aspects, a fluorinated wax or hydrocarbon comprises 21, 22, 23, 24, 25, 26, 27, 28, 29 or 30 backbone carbon atoms. In some aspects, a fluorinated wax or hydrocarbon comprises at least 24 backbone carbon atoms (e.g., 24, 25, 26, 27 or more carbon atoms).

In some aspects, a fluorinated wax or hydrocarbon as described herein comprises a linear, saturated backbone chain having more than 20 carbon atoms, as described herein.

In some aspects, a fluorinated was or hydrocarbon as described herein comprises a linear, saturated backbone chain having more than 24 carbon atoms, as described herein.

In some aspects, a fluorinated wax or hydrocarbon as described herein comprises at least 10, at least 20, at least 30, or at least 40 fluoride substituents.

In some aspects, a fluorinated wax or hydrocarbon has at least 24 carbon atoms in its backbone chain and at least 40 fluoride substituents.

In some aspects, a fluorinated wax or hydrocarbon has 24 carbon atoms in its backbone chain and 50 fluoride substituents.

In respect of the present claimed method, the fluorinated wax is perfluorotetracosane ($CF_3(CF_2)_{22}CF_3$).

In some aspects, a fluorinated wax or hydrocarbon has 15 carbon atoms in its backbone chain and 32 fluoride substituents.

Waxes which comprise a hydrocarbon, fluorinated or non-fluorinated, are also collectively referred to herein as hydrocarbon wax.

### *Thermal evaporation:*

As discussed herein, one underlying methodology of some aspects of the present disclosure comprises thermal evaporation of wax (e.g., fluorinated wax as described herein) on one or more surfaces of a substrate.

As used herein, the term "thermal evaporation" and grammatical diversions thereof, refers to a method of thin film deposition be means of vapor deposition. Typically, a material to be deposited is loaded into a heated container, which can be referred to as a crucible. The crucible may be heated by applying a current, or by any other heating means, and as the material in the crucible becomes hot it generates vapors which travel in straight lines until they strike a colder surface where they re-accumulate as a film. Typically, in order to avoid decomposition of the material at elevated temperatures, thermal evaporation is performed under reduced pressure, in a close system. Further typically, the thickness of the layer is a function of the amount of the material that is evaporated and can therefore depend on the time and temperature of the thermal evaporation.

Figure 1 presents an exemplary system for performing a thermal evaporation according to some aspects of the present disclosure, as is described in further detail in Example 1 hereinbelow.

The expression "thermally evaporated" relates to a substance (e.g., wax or hydrocarbon, as described herein) which was subjected to a thermal evaporation as described herein, and actually relates to the thin film of the substance which is formed on a substrate's surface upon said thermal evaporation.

In some aspects, a thermally-evaporated substance as described herein (e.g., fluorinated or non-fluorinated (hydrocarbon) waxes as described herein) is deposited on a surface of a substrate by evaporation at a temperature that ranges from 100 °C to 700 °C. Typically, thermal evaporation is effected at conditions (temperature and pressure) that allow efficient generation of vapors of the wax. In some aspects, thermally-evaporated wax is deposited on a surface of a substrate by evaporation at a temperature that ranges from 100 °C to 400 °C, under a reduced pressure of about $10^{-4}$-$10^{-5}$ mbars. In some aspects, thermally-evaporated wax is deposited on a surface of a substrate by evaporation at a temperature that ranges from 100 °C to 300 °C, under a reduced pressure of about $10^{-4}$-$10^{-5}$ mbars. In some aspects, thermally-evaporated wax is deposited on a surface of a substrate by evaporation at a temperature that ranges from 150 °C to 250 °C, under a reduced pressure of about $10^{-4}$-$10^{-5}$ mbars.

In exemplary aspects, thermally-evaporated wax is deposited on a surface of a substrate by evaporation at a temperature of about 200 °C, under a reduced pressure of about $10^{-4}$-$10^{-5}$ mbars.

The thermal evaporation deposition of a wax as described herein allows obtaining a highly preferred orientation of the obtained film. The highly preferred orientation of the film further allows producing surfaces with nanoscale roughness, so as to achieve superhydrophobicity and optionally oleophobicity and/or superoleophobicity.

### *Spray coating:*

As discussed herein, another methodology underlying some aspects of the present disclosure comprises depositing (applying) a wax (e.g., fluorinated/non-fluorinated hydrocarbon wax as described herein) on one or more surfaces of a substrate by spray coating.

As used herein, the term "spray coating" and grammatical diversions thereof, refers to a method of thin film deposition by means of spaying a liquid. Typically, a substance (wax) to be deposited is mixed with a solvent, and the obtained mixture is placed in a container equipped with a spraying mechanism (e.g., a commercial "air brush" device) and connected to a gas supply (e.g., in a form of a compressor, an aerosol propellant can, a $CO_2$ tank). The mixture is then forced out of the container as a spray so as to form a layer of the substance on a desirable surface. The spraying can be performed several times on the surface, so as to form several layers of the substances. The thickness of the film deposited on the surface depends on the number of layers, or the number of spraying cycles.

Any commercially available, or otherwise known systems for performing spray coating can be used for applying a wax as described herein on a surface.

A mixture of the wax and a solvent for use in spray coating is typically a solution (namely, when at least 80 percents, or at least 90 percents, or all, of the wax is dissolved in the solvent).

The concentration of the wax in the mixture may range from 0.01 weight percent and up to the solubility limit of the wax in a selected solvent. The concentration may further exceed the solubility limit by e.g., 10 or 20 percents. Sonication may be used to assist is dissolution of the wax in a selected solvent.

The solvent is typically an organic solvent, preferably a hydrophobic organic solvent. Examples include, without limitation, a linear or branched alkane having more than 4 carbon atoms (e.g., pentane, hexane, heptane, octane, and higher alkanes and any mixture thereof); and substituted or non-substituted aromatic compounds such as, for example, benzene, toluene, xylene, naphthalene, and the like.

For fluorinated waxes, fluorinated organic solvents are preferred. Examples include hydrochlorofluorocarbons, for example, HCFC, $CF_3CF_2CHCl_2$, and $CClF_2CF_2CHClF$, and mixture thereof.

Exemplary procedures for performing spray coating are described in further detail in the Examples section that follows.

As used herein, the expression "spray coated" relates to a substance (e.g., fluorinated or non-fluorinated wax or hydrocarbon, as described herein) which was subjected to spray coating, namely, to liquid deposition by spraying a mixture of the substance and a solvent, and actually relates to the thin film of the substance which is formed on a substrate's surface upon said deposition.

*Dip coating:*

As discussed herein, another methodology underlying some aspects of the present disclosure comprises dip coating of a wax as described herein on one or more surfaces of a substrate.

As used herein, the term "dip coating" and grammatical diversions thereof, generally refers to a method of thin film deposition by means of dipping a substrate in a liquid. Typically, a mixture of a material to be deposited and a solvent is prepared. A substrate to be coated or a portion thereof is dipped in the mixture, for a time period that ranges from about 1 second to about 2 minutes and is then dried (e.g., at ambient conditions and temperature).

Any commercially available, or otherwise known systems for performing dip coating can be used for applying a wax as described herein on a surface.

A mixture of the wax and a solvent for use in dip coating is as described hereinabove for spray coating.

As used herein, the expression "dip coated" relates to a substance (e.g., fluorinated or non-fluorinated wax or hydrocarbon, as described herein) which was used in dip coating, namely, subjected to liquid deposition by dipping a substrate in a mixture of the substance and a solvent, and actually relates to the thin film of the substance which is formed on a substrate's surface upon said deposition.

*The Compositions of Matter:*

Described is a composition of matter which is prepared by applying a wax (e.g., a fluorinated wax) as described herein onto at least a portion of a surface of a substrate. As demonstrated in the Examples section that follows, substrates have been successfully utilized for depositing thereon waxes (e.g., fluorinated waxes) as described herein by various methodologies. By "successfully utilized" it is meant that (i) the wax successfully forms a thin film on the substrate's surface; and (ii) the resulting film imparts at least hydrophobicity, but also superhydrophobicity and/or oleophobicity to the substrate's surface.

Described is a composition of matter comprising a substrate, as defined herein, having applied on a surface thereof, as defined herein, a wax (e.g., a fluorinated wax or hydrocarbon), according to any one of the aspects described herein.

In some aspects, the fluorinated hydrocarbon (fluorinated wax) has more than 10, or more than 14 (at least 15 carbon atoms) or more than 20 carbon atoms (namely at least 21 carbon atoms) in its backbone chain, as described herein.

In some of these aspects, at least 10 percents of the carbon atoms are independently substituted by one or more fluoride substituents, as feasible and as described herein.

In some aspects, the wax is a non-fluorinated wax which comprises at least 30 carbon atoms or at least 40 carbon atoms in its backbone chain, as defined herein.

In some aspects, the wax is applied on the surface (or portion of the surface) of the substrate by spray coating, as described herein, namely, by spraying a mixture (e.g., a solution) of the wax and an organic solvent, as described herein, onto the surface or a portion thereof.

In some of these aspects, the wax is fluorinated wax, having at least 15 carbon atoms in its backbone chain, and preferably at least 21 carbon atoms, more preferably at least 24 carbon atoms, in its backbone chain, as described herein.

Alternatively, the wax is non-fluorinated hydrocarbon wax, having at least 30, preferably at least 40, carbon atoms in its backbone chain.

In some aspects, the wax is applied on the surface (or portion of the surface) of the substrate by dip coating, as described herein, namely, by dipping the substrate or a portion thereof in a mixture (e.g., a solution) of the wax and an organic solvent, as described herein.

In some aspects, the wax is applied on the surface (or a portion of the surface) of the substrate by thermal evaporation, as described in further detail herein.

In some of these aspects, the wax is a fluorinated wax having at least 21 carbon atoms in its backbone chain, as defined herein.

In some of any one of these aspects, the wax (e.g., a fluorinated wax as described herein) forms a film on the surface. The thickness of the film can be determined by the duration and/or cycles of the application methodology.

In some of any one of these aspects, the film has a thickness of at least 100 nm. In some aspects, the film has a thickness in a range of from 100 nm to 10 microns, including any integer therebetween.

In some of any one of these aspects, a composition of matter as described herein is characterized by nanoscale roughness, as described herein, e.g., by a RMS value of at least 100 nm.

In some of any one of these aspects, the composition of matter is characterized by a static contact angle as described herein, measured for water, higher than 50°, higher than 70°, higher than 100°, and even 140° or higher. When the wax is fluorinated wax, the static water angle measured from water is higher than 100°, and is indicative of high hydrophobicity.

In exemplary aspects, the static contact angle of the composition of matter is higher than 50°, higher than 60° and even higher than 90 °, wherein the liquid is a hydrophilic or amphiphilic liquid such as, for example, water, glycerol, ethylene glycol or combination thereof.

Such static contact angles are indicative of a high hydrophobicity of the surface.

Exemplary static contact angel values of various liquids, as measured for exemplary compositions of matter as described herein, are presented in Tables 1-3 in the Examples section that follows.

According to one aspect of some aspects of the present disclosure there is provided a composition of matter comprising a substrate having applied on a surface thereof a fluorinated wax, having at least 21 carbon atoms in its backbone chain and at least 10 % fluoro substituents, as described herein.

According to some of these aspects, the composition of matter is characterized by at least one of:

a static liquid contact angle for a hydrophobic liquid, as defined herein, of at least 50°; and

an RMS roughness, a defined herein, which is at least 5-folds the RMS roughness of the surface prior to applying thereon the fluorinated wax, as defined herein.

As described hereinafter, such characteristics can be obtained by thermally evaporating the fluorinated wax onto the surface.

Substrate's surfaces usable according to any one of the aspects of the present disclosure can be hard or soft, organic or inorganic surfaces, including, but not limited to, glass surfaces; porcelain surfaces; ceramic surfaces; polymeric surfaces such as, for example, plastic surfaces, rubbery surfaces, and surfaces comprising or made of polymers such as polypropylene (PP), polycarbonate (PC), high-density polyethylene (HDPE), unplasticized polyvinyl chloride (PVC), and fluoropolymers including but not limited to polytetrafluoroethylene (PTFE, Teflon®); metallic surfaces (e.g., gold surfaces) or can comprise or be made of silicon, organosilicon, stainless steel, gold, MICA, a polymers as described herein or include any combination of the above. In respect of the claimed method, the surface is selected from a glass surface, a porcelain surface, a ceramic surface, a polymeric surface, a metallic surface, and a surface which comprises silicon, an organosilicon, stainless steel, MICA, a polymer, or any combination thereof.

The substrate's surfaces as described herein can further be modified by various chemical and mechanical processes, including, for example, SAMs, PVD, lithography and plasma etching.

In exemplary aspects, a substrate's surface is made of thin (e.g., 200 nm) gold films modified with 1-undecanethiol ($CH_3(CH_2)_{10}SH$) SAMs.

In exemplary aspects, a substrate is made of thin (e.g., 200 nm) gold films deposited *via* PVD on Si wafers, generating a surface that comprises gold (Au surface). In these aspects, the substrate is made of silicon and the surface comprises gold.

In exemplary aspects, the substrate is made of silicon (e.g., is a silicon wafer, or a 100 silicon wafer), and so does the substrate's surface.

The substrate's surface can be crystalline or non-crystalline and is typically utilized without further modification of its crystalline nature. That is to say that contrary to currently known methodologies, the composition of matter as described herein can be made solely by thermal evaporation of the wax (e.g., a fluorinated wax), without treating the substrate's surface for increasing its roughness, prior to deposition of the wax.

For any one of the aspects described herein, the term "surface" of a substrate encompasses one or more surfaces of the substrate, and also encompasses a portion of a surface or portions of two or more surfaces of a substrate, and any combination of the foregoing.

In some of any one of the aspects described herein, the wax is applied on the substrate without modifying the substrate's surface prior to the wax deposition. Thus, for example, surface roughness upon wax deposition is attributed mainly to the wax deposition is not a result of surface modification (e.g., by micro- or nano-patterning or pitching) prior to wax deposition.

### *Compositions of Matter prepared by thermally evaporating wax:*

Also described is a composition of matter comprising a substrate having deposited on a surface thereof a thermally-evaporated wax, as defined herein.

According to an aspect of some aspects of the present disclosure, there is provided a composition of matter comprising a substrate having deposited on a surface thereof a thermally-evaporated fluorinated wax, as defined herein.

In some aspects, and as discussed and demonstrated herein, surfaces having a fluorinated wax thermally-evaporated thereon exhibit oleophobicity, which is reflected, for example, by a static liquid contact angle for hydrophobic and/or oily liquids of at least 50 ° and/or by a substantial increase of the RMS roughness of the surface.

Thus, according to an aspect of some aspects of the present disclosure, there is provided a composition of matter which comprises a substrate having deposited on a surface thereof a fluorinated wax, as described herein, wherein the surface is characterized by at least one of:

a static liquid contact angle for a hydrophobic liquid of at least 50°; and
an RMS roughness which is at least 5-folds the RMS roughness of the surface (before deposition of the wax).

In some aspects, there is provided a composition of matter which is prepared by thermally evaporating a wax (e.g., a fluorinated wax) as described herein onto at least a portion of a surface of a substrate. As demonstrated in the Examples section that follows, substrates having surfaces of widely different chemical nature can be successfully utilized for thermal evaporation of waxes (e.g., fluorinated waxes) as described herein. By "successfully utilized" it is meant that (i) the wax successfully forms a thin film on the substrate's surface upon thermal evaporation thereof; and (ii) the resulting film imparts hydrophobicity and/or oleophobicity to the substrate's surface.

Also described is a composition of matter comprising a substrate, as defined herein, having applied on a surface thereof, as defined herein, a thermally-evaporated fluorinated wax, as described herein.

In some of any one of the aspects described herein for thermally-evaporated fluorinated wax, the fluorinated hydrocarbon (fluorinated wax) has more than 20 carbon atoms (namely at least 21 carbon atoms) in its backbone chain wherein at least 10 percents of said carbon atoms are independently substituted by one or more fluoride substituents, as feasible and as described herein.

In some aspects, the thermally-evaporated wax (e.g., a fluorinated wax as described herein) forms a film on the surface.

In some aspects, the film has a thickness of at least 100 nm. In some aspects, the film has a thickness in a range of from 100 nm to 10 microns, including any integer therebetween. The thickness of the film can be controlled by controlling the thermal evaporation process (e.g., the time of thermal evaporation).

In some aspects, the film is comprised of crystal platelets. In some aspects, an average size of the crystal platelets is in a range of from 50 nm to 700 nm.

In some aspects, an average size of the crystal platelets is about 100-200 nm.

In some aspects, the crystal platelets are mostly positioned perpendicular to the substrate.

In some aspects, a composition of matter as described herein exhibits a XRD pattern that features a preferred orientation.

In some aspects, at least 20 percents of a film formed from the thermally-evaporated fluorinated wax has the same orientation. In some aspects, at least 50 percents of a film formed from the thermally-evaporated fluorinated hydrocarbon has the same orientation. In some aspects, at least 80 percents of a film formed from the thermally-evaporated fluorinated hydrocarbon has the same orientation. In some aspects, at least 90 percents of a film formed from the thermally-evaporated fluorinated hydrocarbon has the same orientation. In some aspects, at least 95 percents of a film formed from the thermally-evaporated fluorinated hydrocarbon has the same orientation. In some aspects, at least 99 percents of a film formed from the thermally-evaporated fluorinated hydrocarbon has the same orientation.

Figure 2A presents an XRD spectrum of an exemplary composition of matter according to some aspects of the present disclosure, and demonstrates a highly preferred orientation.

As discussed hereinabove, the composition of matter described herein is characterized by nanoscale roughness which imparts a high degree of oleophobicity to the substrate's surface.

The term "roughness" as used herein relates to the irregularities in the surface texture. Irregularities are the peaks and valleys of a surface.

In some aspects, roughness value is computed by AA (arithmetic average) and RMS (root-mean-square). The AA method uses the absolute values of the deviations in the averaging procedure, whereas the RMS method utilizes the squared values of the deviations in the averaging process.

RMS roughness ($R_q$) is typically calculated according to the following formula:

$$R_{\mathrm{q}} = \sqrt{\frac{1}{n} \sum_{i=1}^{n} y_i^2}$$

wherein $T_\ell$ represents ordered, equally spaced points along the trace, and $y_i$ is the vertical distance from the mean line to the $i^{th}$ data point.

RMS can be measured by confocal microscopy, as described in Example 2 in the Examples section that follows.

In some aspects, the composition of matter is characterized by a RMS roughness (e.g., measured as described herein) at least 5-folds higher than a RMS roughness of the surface of the substrate (before thermal evaporation of the hydrocarbon).

In some aspects, the composition of matter is characterized by a RMS roughness at least 6-folds higher than a RMS roughness of the surface of the substrate (before thermal evaporation of the wax). In some aspects, the composition of matter is characterized by a RMS roughness at least 7-folds higher than a RMS roughness of the surface of the substrate (before thermal evaporation of the hydrocarbon). In some aspects, the composition of matter is characterized by a RMS roughness at least 8-folds higher than a RMS roughness of the surface of the substrate (before thermal evaporation of the wax). In some aspects, the composition of matter is characterized by a RMS roughness at least 9-folds higher than a RMS roughness of the surface of the substrate (before thermal evaporation of the wax). In some aspects, the composition of matter is characterized by a RMS roughness at least 10-folds higher than a RMS roughness of the surface of the substrate (before thermal evaporation of the wax).

In an exemplary aspect, for a substrate's surface having RMS roughness of 5 nm (before deposition of a wax as described herein), the composition of matter is characterized by a RMS roughness of at least 100 nm, at least 150 nm, at least 200 nm.

In some aspects, the composition of matter is characterized by a RMS roughness of at least 0.1 $\mu$m. In some aspects, the composition of matter is characterized by a RMS roughness of at least 0.2 $\mu$m. In some aspects, the composition of matter is characterized by a RMS roughness of at least 0.3 $\mu$m. In some aspects, the composition of matter is characterized by a RMS roughness of at least 0.4 $\mu$m.

In some aspects, the composition of matter is characterized by a time-dependent and/or temperature-dependent RMS roughness. That is, the RMS roughness changes with time and/or with the temperature at which the composition of matter is maintained upon thermally evaporating the hydrocarbon.

In some aspects, the composition of matter exhibits an effect of increased roughness with time. In some aspects, roughening rate is temperature-dependent and increases when the composition of matter is maintained at temperature that ranges from 60 °C to 150 °C and decreases when the composition of matter is maintained at a temperature that ranges from -30 °C to 30 °C. Any intermediate range or value is also contemplated.

As discussed herein, the chemical nature of the wax (e.g., being a fluorinated wax or hydrocarbon as described herein) and the roughness imparted by thermal evaporation of the wax, impart to the substrate surface a high degree of oleophobicity.

In some aspects, the surface's oleophobicity is determined by static contact angle measurements.

As used herein, "static contact angle" describes the angle that a liquid substance forms with respect to the substrate surface at the place where the free surface of quiescent liquid contacts to the horizontal surface of the substrate.

Typically, but not exclusively, in order to measure the static contact angle, a drop of liquid is formed on the tip of a hypodermic needle attached to a screw syringe. The syringe is fastened to a stand which reduces any irregularities that are produced by manual drop deposition. The substrate is then raised until it touches the drop using the Y control of the stage. The drop is the then brought into the field of view and onto the focal point of the microscope by x-y translation of the stage and image is captured. The static contact angle is calculated by methods known in the art. An exemplary methodology and system for measuring a static contact angle in described in Example s in the Examples section that follows.

The static contact angle of a surface corresponds to a tested liquid.

When a liquid is hydrophilic or amphiphilic, a static contact angle of at least 90° is indicative for superhydrophobicity of a substrate's surface.

When a liquid is hydrophobic or oily, a static contact angle of at least 50° is indicative for oleophobicity of a substrate's surface.

When a liquid is hydrophobic or oily, a static contact angle of at least 90° is indicative for superoleophobicity of a substrate's surface.

As used herein and in the art, a "hydrophilic liquid" is a substance which is liquid at room temperature and which readily interacts with or is dissolved by water and other polar substances.

Exemplary hydrophilic liquids include, but are not limited to, water, aqueous solutions, and any other liquids which are polar and dissolvable in water (water-miscible).

An "amphiphilic liquid" is a substance which is liquid at room temperature and which possesses both hydrophilic and lipophilic properties. Amphiphilic liquids are typically organic substances which comprise both polar and non-polar groups.

Amphiphilic liquids may dissolve in water and to some extent in non-polar organic solvents. When placed in an immiscible biphasic system consisting of aqueous and organic solvent an amphiphilic liquid is partitioned between the two phases. The extent of the hydrophobic and hydrophilic portions of the substance determines the extent of partitioning.

Exemplary amphiphilic liquids include, but are not limited to, sugars, polyalcohols (e.g., glycerols), alkylene glycols (e.g., ethylene glycol).

A "hydrophobic liquid" is also referred to in the art as a "lipophilic liquid", and is a substance which is liquid at room temperature and which is typically not dissolvable in aqueous solution and is dissolvable in non-polar organic solvents.

Exemplary hydrophobic liquids include, but are not limited to, organic substances such as alkanes, particularly long-chain alkanes, cycloalkanes, including bicyclic compounds, aryls (both substituted and unsubstituted), and fatty acids.

Oily liquids are hydrophobic substances which have an oily constitution and include, for example, natural and synthetically prepared oils such as olive oil, other plant and animal-derived oils, and inorganic oils such as silicon oil and other mineral oils.

Hydrophilic, amphiphilic and hydrophobic substances can also be determined by the partition coefficient thereof.

A partition coefficient is the ratio of concentrations of a compound in the two phases of a mixture of two immiscible liquids at equilibrium. Normally, one of the solvents chosen is water while the second is hydrophobic such as octanol. The logarithm of the ratio of the concentrations of the un-ionized solute in the solvents is called **log *P.***

Hydrophobic liquids are characterized by LogP higher than 1; hydrophilic liquids are characterized by LogP lower than 1 and amphiphilic liquids are characterized by LogP of about 1 (e.g., 0.8-1.2).

In some aspects, when the static contact angle is measured for water or other hydrophilic liquids as the liquid, the composition of matter is characterized by a static contact angle of at least 150°, at least 160, and even of at least 170°.

In exemplary aspects, the static contact angle of the composition of matter is at least 150°, at least 160° and even at least 170 °, wherein the liquid is a hydrophilic or amphiphilic liquid such as, for example, water, glycerol, ethylene glycol or combination thereof.

Such static contact angles are indicative of a superhydrophobicity of the surface.

In exemplary aspects the static contact angle of the composition of matter is at least 110°, at least 120° and even at least 130 ° wherein the liquid is a hydrophobic liquid as described herein. Such static contact angles are indicative of oleophobicity of the surface.

Exemplary hydrophobic liquids include, but are not limited to, benzyl chloride, chlorobenzene, cyclohexane, hexadecane or a combination thereof.

In exemplary aspects, the liquid is a cycloalkyl and the static contact angle is at least 100°.

In exemplary aspects, the liquid is a substituted or unsubstituted aryl and said static contact angle is at least 120°.

In exemplary aspects, the liquid is a substituted or unsubstituted aralkyl and the static contact angle is at least 120°.

Exemplary static contact angel values of various liquids, as measured for exemplary compositions of matter as described herein, are presented in Tables 1 and 2 in the Examples section that follows.

***The Processes:***

Also described are processes of preparing any one of the compositions of matter described herein.

According to an aspect of some aspects of the present disclosure there is provided a process of preparing a composition of matter comprising thermally-evaporated wax applied on a surface of a substrate, as described herein, which is effected by thermally evaporating a wax as described herein (e.g., a fluorinated wax or hydrocarbon) onto a surface of a substrate, as described herein.

In some aspects, thermally evaporating the wax is effected as described hereinabove.

In some aspects, the process further comprises, subsequent to thermally evaporating the wax, maintaining the obtained composition of matter at a certain temperature for a certain time period. Such a step is also referred to as "aging".

In some aspects, the aging is made during a time period that ranges from 10 hours to several months.

In some aspects, the composition of matter is maintained at a temperature that ranges from -250 °C to 250 °C. In some aspects, the composition of matter is maintained at a temperature that ranges from -100 °C to 150 °C. In some aspects, the composition of matter is maintained at a temperature that ranges from -50 °C to 120 °C.

In exemplary aspects, the composition of matter is maintained at a temperature that ranges from -30 °C to 90 °C.

In some aspects, the composition of matter is maintained at 50 °C, for a time period of at least 5 hours. In some aspects, the composition of matter is maintained at 60 °C, for a time period of at least 5 hours. In some aspects, the composition of matter is maintained at 70 °C, for a time period of at least 5 hours. In some aspects, the composition of matter is maintained at 80 °C, for a time period of at least 5 hours. In some aspects, the composition of matter is maintained at 90 °C, for a time period of at least 5 hours. In some aspects, the composition of matter is maintained at 90 °C, for a time period of at least 5 hours.

In exemplary aspects, the composition of matter is maintained at a temperature that ranges from 40 to 90 °C, or from 50 to 90 °C, or from 60 to 90 °C, or from 70 to 90 °C, for a time period of at least 10 hours.

In exemplary aspects, the composition of matter is maintained at 90 °C, for a time period of at least 20 hours.

In some aspects, the process of thermally evaporating the wax consists essentially of the thermal evaporation as described herein.

In some aspects, the process of thermally evaporating the wax is devoid of modifying the substrate's surface prior to thermally evaporating the wax thereon.

According to an aspect of some aspects of the present disclosure there is provided a process of preparing a composition of matter comprising spray-coated wax (e.g., fluorinated was or hydrocarbon) applied on a surface of a substrate, as described herein, which is effected by spraying a mixture of a wax as described herein (e.g., a fluorinated wax or hydrocarbon) and an organic solvent as described herein onto a surface of a substrate, as described herein. The process is effected in accordance with the aspects of a spray coating as described herein.

According to an aspect of some aspects of the present disclosure there is provided a process of preparing a composition of matter comprising dip-coated wax (e.g., fluorinated was or hydrocarbon) applied on a surface of a substrate, as described herein, which is effected by dipping the substrate or a portion thereof in a mixture of a wax as described herein (e.g., a fluorinated wax or hydrocarbon) and an organic solvent as described herein. The process is effected in accordance with the aspects of dip coating as described herein.

In some aspects of the aspects of spray coating and dip coating, the process is devoid of modifying the substrate's surface prior to deposition of the wax on the surface.

In some aspects, the process consists essentially of the spray coating or dip coating procedures as described herein.

## Articles of Manufacturing:

Also described are articles-of-manufacturing which comprise any one of the compositions of matter as described herein.

In some aspects, there is provided an article-of-manufacturing which comprises a substrate having deposited on a surface thereof a thermally-evaporated wax (e.g., a fluorinated wax or hydrocarbon) as described herein.

In some aspects, there is provided an article-of-manufacturing which comprises a substrate having deposited on a surface thereof a wax (e.g., a fluorinated wax or hydrocarbon) as described herein, wherein the surface is characterized by roughness and/or static liquid contact angle as described for the compositions of matter hereinabove.

In some aspects, there is provided an article of manufacturing which is prepared by thermally evaporating a wax (e.g., a fluorinated wax or hydrocarbon) as described herein onto a surface or a portion of surface thereof.

In some aspects, there is provided an article of manufacturing which is prepared by spray coating a wax (e.g., a fluorinated wax or hydrocarbon) as described herein onto a surface or a portion of the surface thereof.

In some aspects, there is provided an article of manufacturing which is prepared by dip coating a wax (e.g., a fluorinated wax or hydrocarbon) as described herein onto a surface or a portion of the surface thereof.

Any article that may benefit from the hydrophobicity, superhydrophobicity and/or superoleophobicity of the compositions of matter described herein is contemplated.

Exemplary articles of manufacturing include, but are not limited to, implantable medical devices such as, but are not limited to, pacemakers, heart valves, replacement joints, catheters, catheter access ports, dialysis tubing, gastric bands, shunts, screw plates, artificial spinal disc replacements, internal implantable defibrillators, cardiac resynchronization therapy devices, implantable cardiac monitors, mitral valve ring repair devices, left ventricular assist devices (LVADs), artificial hearts, implantable infusion pumps, implantable insulin pumps, stents, implantable neurostimulators, maxillofacial implants, dental implants, and the like.

Exemplary article of manufacturing include packages or containers, for example, food packages and containers, beverage packages and containers, medical device packages, agricultural packages and containers (of agrochemicals), blood sample or other biological sample packages and containers, and any other packages or containers of various articles.

Exemplary food packages include packages of dairy products and/or containers for storage or transportation of dairy products.

Other exemplary articles of manufacturing include milk storage and processing devices such as, but not limited to, containers, storage tanks, raw milk holding equipments, dairy processing operations conveyer belts, tube walls, gaskets, rubber seals, stainless steel coupons, piping systems, filling machine, silo tanks, heat exchangers, postpasteurization equipments, pumps, valves, separators, and spray devices.

In some aspects, the article of manufacturing is an energy harvesting device, for example, a microelectronic device, a microelectromechanic device, a photovoltaic device and the like.

In some aspects, the article of manufacturing is a microfluidic device, for example, micropumps or micro valves and the like.

In some aspects, the article of manufacturing includes a sealing part, for example, O rings, and the like.

In some aspects, the article of manufacturing is, for example, article having a corrosivable surface.

In some aspects, the article of manufacturing is an agricultural device.

In some aspects, the article of manufacturing is made of textile, for example, tough cottons.

In some aspects, the article of manufacturing is fuel transportation device.

In some aspects, the article of manufacture is a construction element, such as, but not limited to, paints, walls, windows, door handles, and the like.

In some aspects, the article of manufacture is an element in water treatment systems (such as for containing and/or transporting and/or treating aqueous media or water), devices, containers, filters, tubes, solutions and gases and the likes.

In some aspects, the article of manufacture is an element is organic waste treatment systems (such as for containing and/or disposing and/or transporting and/or treating organic waste), devices, containers, filters, tubes, solutions and gases and the likes.

*Anti-Biofilm Formation (ABF) Activity:*

While studying the activity of compositions of matter in which waxes are deposited on a substrate's surface, as described herein, the present inventors have surprisingly uncovered that at least some of such compositions of matter exhibit high antifouling activity and can therefore be beneficially incorporated in, or utilized in preparing, articles of manufacturing in which such an activity is desired.

Herein "anti-biofouling activity" or "antifouling activity" is referred to as an ability to inhibit (prevent), reduce or retard biofilm formation of a substrate's surface.

The term "biofilm", as used herein, refers to an aggregate of living cells which are stuck to each other and/or immobilized onto a surface as colonies. The cells are frequently embedded within a self-secreted matrix of extracellular polymeric substance (EPS), also referred to as "slime", which is a polymeric sticky mixture of nucleic acids, proteins and polysaccharides.

In the context of the present aspects, the living cells forming a biofilm can be cells of a unicellular microorganism (prokaryotes, archaea, bacteria, eukaryotes, protists, fungi, algae, euglena, protozoan, dinoflagellates, apicomplexa, trypanosomes, amoebae and the likes), or cells of multicellular organisms in which case the biofilm can be regarded as a colony of cells (like in the case of the unicellular organisms) or as a lower form of a tissue.

In the context of the present aspects, the cells are of microorganism origins, and the biofilm is a biofilm of microorganisms, such as bacteria and fungi. The cells of a microorganism growing in a biofilm are physiologically distinct from cells in the "planktonic form" of the same organism, which by contrast, are single-cells that may float or swim in a liquid medium. Biofilms can go through several life-cycle steps which include initial attachment, irreversible attachment, one or more maturation stages, and dispersion.

The phrases "anti-biofilm formation (ABF) activity" refers to the capacity of a substance to effect the prevention of formation of a biofilm of bacterial, fungal and/or other cells; and/or to effect a reduction in the rate of buildup of a biofilm of bacterial, fungal and/or other cells, on a surface of a substrate.

In some aspects, the biofilm is formed of bacterial cells (or from a bacterium).

In some aspects, a biofilm is formed of bacterial cells of bacteria selected from the group consisting of all Gram-positive and Gram-negative bacteria.

In some aspects, the Gram-negative biofilm-forming bacteria may be selected from the group of milk-processing environment species such as, but not limited to, *Proteus, Enterobacter, Citrobacter, Shigella, Escherichia, Edwardsiella, Aeromonas, Plesiomonas, Moraxella, Alcaligenes,* and *Pseudomonas.*

In some aspects, the Gram-positive biofilm-forming bacteria may be selected from the group of milk-processing environment species consisting of *Staphylococcus, Bacillus, Listeria,* and lactic acid bacteria such as, but not limited to, *Streptococcus, Leuconostoc,* and *Pediococcus.*

In exemplary aspects, a biofilm is formed of *Bacillus. cereus* bacterial cells.

In exemplary aspects, a biofilm is formed of *Pseudomonas aeruginosa* bacterial cells.

As demonstrated hereinbelow, exemplary compositions of matter as described herein were shown to exhibit antibiofilm activity and can thus prevent, retard or reduce the formation or the mass of a biofilm. Therefore, thermally-evaporated waxes as described herein can be efficiently incorporated within compositions of matter and/or articles of manufacturing containing same in which anti-biofilm formation activity is beneficial (e.g., is required or desired).

According to some aspects of the present disclosure, the activity of preventing or reducing the formation of a biofilm, may be achieved by a substrate having deposited on a surface, or a portion of a surface, thereof a thermally-evaporated wax or hydrocarbon, as described herein.

In some aspects of the present disclosure, the activity of preventing or reducing the formation of a biofilm, may be achieved by a substrate having deposited on a surface thereof a thermally-evaporated fluorinated wax or hydrocarbon, as described herein.

In some aspects of the present disclosure, the activity of preventing or reducing the formation of a biofilm, may be achieved by a substrate having deposited on a surface thereof a spray-coated or dip-coated wax (e.g., fluorinated wax or hydrocarbon), as described herein.

The prevention or reducing of forming a biofilm assumes that the biofilm has not yet been formed, and hence the presence of the wax is required also in cases where no biofilm is present or detected.

As used herein, the term "preventing" in the context of the formation of a biofilm, indicates that the formation of a biofilm is essentially nullified or is reduced by at least 20 %, at least 30 %, at least 40 %, at least 50 %, at least 60 %, at least 70 %, at least 80 %, at least 90 %, including any value therebetween, of the appearance of the biofilm in a comparable situation lacking the presence of the thermally-evaporated wax or a composition of matter containing same. Alternatively, preventing means a reduction to at least 15 %, 10 % or 5 % of the appearance of the biofilm in a comparable situation lacking the presence of the thermally-evaporated wax or a composition of matter containing same. Methods for determining a level of appearance of a biofilm are known in the art.

In some aspects, inhibiting, reducing and/or retarding a formation of a biofilm as described herein is reflected by reducing biofilm formation on the substrate's surface by at least 20 %, at least 30 %, at least 40 %, at least 50 %, at least 60 %, at least 70 %, at least 80 %, at least 90 %, including any value therebetween, compared to the same substrate which does not have said hydrocarbon applied on a surface thereof.

In some aspects, an amount of biofilm formed on a substrate's surface upon incubating the substrate or an article of manufacturing containing same with bacterial cells in the presence of a growth medium for 24 hours is lower than $10^5$ CFU. In some aspects, it is lower than $10^4$, lower than $10^3$, lower than $10^2$ and even lower.

Further according to an aspect of some aspects of the present disclosure there is provided a method of inhibiting, reducing and/or retarding a formation of a biofilm in or on a substrate or a composition of matter containing the substrate or an article containing the substrate or the composition of matter, which is effected by thermally evaporating onto a surface of the substrate an antifouling effective amount of a wax (e.g., a hydrocarbon) as described herein.

Further according to an aspect of some aspects of the present disclosure there is provided a method of inhibiting, reducing and/or retarding a formation of a biofilm in or on a substrate or a composition of matter containing the substrate or an article containing the substrate or the composition of matter, which is effected by thermally evaporating onto a surface of the substrate an antifouling effective amount of a fluorinated wax as described herein.

Thermal evaporation of the wax can be effected so as to deposit on a substrate an antifouling effective amount of the wax.

Further according to an aspect of some aspects of the present disclosure there is provided a method of inhibiting, reducing and/or retarding a formation of a biofilm in or on a substrate or a composition of matter containing the substrate or an article containing the substrate or the composition of matter, which is effected by depositing onto a surface of the substrate an antifouling effective amount of a wax or a fluorinated wax as described herein, wherein the depositing is effected by dip-coating, spray-coating or thermal evaporation, as described herein.

As used herein, "an antifouling effective amount" is defined as the amount which is sufficient to inhibit, retard and/or reduce the formation of a biofilm as described herein. Assays for determining an antifouling effective amount are known is the art and are contemplated herein.

Substrates usable in the context of these aspects of the present disclosure include any of the substrates described hereinabove.

Composition of matters usable in the context of these aspects include any of the compositions of matter described hereinabove.

Articles of manufacturing usable in the context of these aspects include any of the articles of manufacturing described hereinabove.

Preferably, articles of manufacturing in which prevention of biofilm formation are of high importance are usable in the context of these aspects of the present disclosure.

Such articles of manufacturing include, but are not limited to, milk production and processing devices, medical devices, packages and containers, agricultural devices, construction elements, water treatment systems and elements thereof, and organic waste treatment systems and elements thereof.

According to some aspects of the present disclosure, the composition presented herein is packaged in a packaging material and identified in print, in or on the packaging material, for use in reducing or preventing the formation of a biofilm and/or disrupting a biofilm in or on a substrate, as described herein.

Any of the articles of manufacturing or compositions of matter as described herein, which comprise a wax as described herein deposited on a substrate's surface can be obtained by applying the wax (e.g., by thermal evaporation, spray coating or dip coating) onto a desired surface or any other portion of the article, composition or substrate. Thermal evaporation, spray coating and dip coating can be effected as described herein.

Alternatively, compositions of matter as described herein (comprising a substrate having applied on a surface thereof a wax as described herein) can be incorporated within any of the articles of manufacturing described herein, during manufacture of the article of manufacturing.

According to an aspect of some aspects of the present disclosure, there is provided a composition of matter as described in any one of the present aspects, which is identified for use in manufacturing an article containing the substrate of the composition of matter.

In some aspects, such a composition is identified for use in manufacturing articles of manufacture which are characterized as capable of reducing, inhibiting and/or retarding biofilm formation, as described herein.

***General:***

As used herein the term "about" refers to $\pm$ 10 %.

The terms "comprises", "comprising", "includes", "including", "having" and their conjugates mean "including but not limited to".

The term "consisting of' means "including and limited to".

The term "consisting essentially of' means that the composition, method or structure may include additional ingredients, steps and/or parts, but only if the additional ingredients, steps and/or parts do not materially alter the basic and novel characteristics of the claimed composition, method or structure.

The word "exemplary" is used herein to mean "serving as an example, instance or illustration". Any aspect described as "exemplary" is not necessarily to be construed as preferred or advantageous over other aspects and/or to exclude the incorporation of features from other aspects.

The word "optionally" is used herein to mean "is provided in some aspects and not provided in other aspects". Any particular aspect of the disclosure may include a plurality of "optional" features unless such features conflict.

As used herein, the singular form "a", "an" and "the" include plural references unless the context clearly dictates otherwise. For example, the term "a compound" or "at least one compound" may include a plurality of compounds, including mixtures thereof.

Throughout this application, various aspects of this disclosure may be presented in a range format. It should be understood that the description in range format is merely for convenience and brevity and should not be construed as an inflexible limitation on the scope of the disclosure. Accordingly, the description of a range should be considered to have specifically disclosed all the possible subranges as well as individual numerical values within that range. For example, description of a range such as from 1 to 6 should be considered to have specifically disclosed subranges such as from 1 to 3, from 1 to 4, from 1 to 5, from 2 to 4, from 2 to 6, from 3 to 6 etc., as well as individual numbers within that range, for example, 1, 2, 3, 4, 5, and 6. This applies regardless of the breadth of the range.

Whenever a numerical range is indicated herein, it is meant to include any cited numeral (fractional or integral) within the indicated range. The phrases "ranging/ranges between" a first indicate number and a second indicate number and "ranging/ranges from" a first indicate number "to" a second indicate number are used herein interchangeably and are meant to include the first and second indicated numbers and all the fractional and integral numerals therebetween.

As used herein the term "method" refers to manners, means, techniques and procedures for accomplishing a given task including, but not limited to, those manners, means, techniques and procedures either known to, or readily developed from known manners, means, techniques and procedures by practitioners of the chemical, pharmacological, biological, biochemical and medical arts.

As used herein, the term "treating" includes abrogating, substantially inhibiting, slowing or reversing the progression of a condition, substantially ameliorating clinical or aesthetical symptoms of a condition or substantially preventing the appearance of clinical or aesthetical symptoms of a condition.

As used herein, the term "alkyl" describes an aliphatic hydrocarbon including straight chain and branched chain groups. The alkyl group has 1 to 100 carbon atoms, and more preferably 1-50 carbon atoms. Whenever a numerical range; e.g., "1-100", is stated herein, it implies that the group, in this case the alkyl group, may contain 1 carbon atom, 2 carbon atoms, 23 carbon atoms, etc., up to and including 100 carbon atoms. In the context of the present disclosure, a "long alkyl" or "high alkyl" is an alkyl having at least 10, or at least 15 or at least 20 carbon atoms in its main chain (the longest path of continuous covalently attached atoms), and may include, for example, 10-100, or 15-100 or 20-100 or 21-100, or 21-50 carbon atoms. A "short alkyl" or "low alkyl" has 10 or less main-chain carbons. The alkyl can be substituted or unsubstituted, as defined herein.

The term "alkyl", as used herein, also encompasses saturated or unsaturated hydrocarbon, hence this term further encompasses alkenyl and alkynyl.

The term "alkenyl" describes an unsaturated alkyl, as defined herein, having at least two carbon atoms and at least one carbon-carbon double bond. The alkenyl may be substituted or unsubstituted by one or more substituents, as described hereinabove.

The term "alkynyl", as defined herein, is an unsaturated alkyl having at least two carbon atoms and at least one carbon-carbon triple bond. The alkynyl may be substituted or unsubstituted by one or more substituents, as described hereinabove.

The term "cycloalkyl" or "cycloalkane" describes an all-carbon monocyclic or fused ring (*i.e.,* rings which share an adjacent pair of carbon atoms) group where one or more of the rings does not have a completely conjugated pi-electron system. The cycloalkyl group may be substituted or unsubstituted, as indicated herein.

The term "aryl" or "aromatic" describes an all-carbon monocyclic or fused-ring polycyclic (*i.e.*, rings which share adjacent pairs of carbon atoms) groups having a completely conjugated pi-electron system. The aryl group may be substituted or unsubstituted, as indicated herein.

The term "alkoxy" describes both an -O-alkyl and an -O-cycloalkyl group, as defined herein.

The term "aryloxy" describes an -O-aryl, as defined herein.

Each of the alkyl, cycloalkyl and aryl groups in the general formulas herein may be substituted by one or more substituents, whereby each substituent group can independently be, for example, halide, alkyl, alkoxy, cycloalkyl, alkoxy, nitro, amine, hydroxyl, thiol, thioalkoxy, thiohydroxy, carboxy, amide, aryl and aryloxy, depending on the substituted group and its position in the molecule. Additional substituents are also contemplated.

The term "halide", "halogen" or "halo" describes fluorine, chlorine, bromine or iodine.

The term "haloalkyl" describes an alkyl group as defined herein, further substituted by one or more halide(s).

The term "hydroxyl" or "hydroxy" describes a -OH group.

The term "thiohydroxy" or "thiol" describes a -SH group.

The term "thioalkoxy" describes both an -S-alkyl group, and a -S-cycloalkyl group, as defined herein.

The term "thioaryloxy" describes both an -S-aryl and a -S-heteroaryl group, as defined herein.

The term "amine" describes a -NR'R" group, with R' and R" as described herein.

The term "heteroaryl" describes a monocyclic or fused ring (*i.e.*, rings which share an adjacent pair of atoms) group having in the ring(s) one or more atoms, such as, for example, nitrogen, oxygen and sulfur and, in addition, having a completely conjugated pi-electron system. Examples, without limitation, of heteroaryl groups include pyrrole, furane, thiophene, imidazole, oxazole, thiazole, pyrazole, pyridine, pyrimidine, quinoline, isoquinoline and purine.

The term "heteroalicyclic" or "heterocyclyl" describes a monocyclic or fused ring group having in the ring(s) one or more atoms such as nitrogen, oxygen and sulfur. The rings may also have one or more double bonds. However, the rings do not have a completely conjugated pi-electron system. Representative examples are piperidine, piperazine, tetrahydrofuran, tetrahydropyrane, morpholino and the like.

The term "carboxy" or "carboxylate" describes a -C(=O)-OR' group, where R' is hydrogen, alkyl, cycloalkyl, alkenyl, aryl, heteroaryl (bonded through a ring carbon) or heteroalicyclic (bonded through a ring carbon) as defined herein.

The term "carbonyl" describes a -C(=O)-R' group, where R' is as defined hereinabove.

The above-terms also encompass thio-derivatives thereof (thiocarboxy and thiocarbonyl).

The term "thiocarbonyl" describes a -C(=S)-R' group, where R' is as defined hereinabove.

A "thiocarboxy" group describes a -C(=S)-OR' group, where R' is as defined herein.

A "sulfinyl" group describes an -S(=O)-R' group, where R' is as defined herein.

A "sulfonyl" or "sulfonate" group describes an -S(=O)$_2$-R' group, where Rx is as defined herein.

A "carbamyl" or "carbamate" group describes an -OC(=O)-NR'R" group, where R' is as defined herein and R" is as defined for R'.

A "nitro" group refers to a -NO$_2$ group.

A "cyano" or "nitrile" group refers to a -C≡N group.

As used herein, the term "azide" refers to a -N$_3$ group.

The term "sulfonamide" refers to a -S(=O)$_2$-NR'R" group, with R' and R" as defined herein.

The term "phosphonyl" or "phosphonate" describes an -O-P(=O)(OR')$_2$ group, with R' as defined hereinabove.

The term "phosphinyl" describes a -PR'R" group, with R' and R" as defined hereinabove.

The term "alkaryl" describes an alkyl, as defined herein, which substituted by an aryl, as described herein. An exemplary alkaryl is benzyl.

The term "heteroaryl" describes a monocyclic or fused ring (i.e., rings which share an adjacent pair of atoms) group having in the ring(s) one or more atoms, such as, for example, nitrogen, oxygen and sulfur and, in addition, having a completely conjugated pi-electron system. Examples, without limitation, of heteroaryl groups include pyrrole, furane, thiophene, imidazole, oxazole, thiazole, pyrazole, pyridine, pyrimidine, quinoline, isoquinoline and purine. The heteroaryl group may be substituted or unsubstituted by one or more substituents, as described hereinabove. Representative examples are thiadiazole, pyridine, pyrrole, oxazole, indole, purine and the like.

As used herein, the terms "halo" and "halide", which are referred to herein interchangeably, describe an atom of a halogen, that is fluorine, chlorine, bromine or iodine, also referred to herein as fluoride, chloride, bromide and iodide.

The term "haloalkyl" describes an alkyl group as defined above, further substituted by one or more halide(s).

## EXAMPLES

Reference is now made to the following examples which, together with the above descriptions, illustrate the disclosure in a non limiting fashion.

### EXAMPLE 1

### SAMPLE PREPARATION OF THERMALLY-EVAPORATED WAXES

#### Materials:

200 nm gold films modified with 1-undecanethiol (CH$_3$(CH$_2$)$_{10}$SH) SAMs (purity 98%) were purchased from Sigma-Aldrich, France.

(100) silicon wafers were purchased from Si-Mat, silicon materials (Germany).

Microscope glass slides were purchased from Marienfeeld (Germany).

Stainless steel substrates were obtained from the Agricultural Research Organization - the Volcani Center.

200 nm gold films deposited via PVD on Si wafers were purchased from Si-Mat, silicon materials (Germany).

n-Alkane hexatriacontane paraffin wax (C$_{36}$H$_{74}$), n-Alkane tetracontane paraffin wax (C$_{40}$H$_{82}$), n-Alkane tetra-tetracontane paraffin wax (C$_{44}$H$_{90}$), and n-Alkane pentacontane paraffin wax (C$_{50}$H$_{102}$) were purchased from Sigma-Aldrich (France). Fluorinated wax, (CF$_3$(CF$_2$)$_{22}$CF$_3$), was purchased from Sigma-Aldrich (France). Fluorinated wax, perfluoroeicosane, was purchased from Alfa Aesar.

#### Sample Preparation:

*General Procedure:* The films are prepared via deposition of a wax (e.g., paraffin or a fluorinated wax, as described herein) on a surface of a substrate. The wax is deposited by thermal evaporation.

An exemplary system is presented in Figure 1. A substrate's sample **12** is placed in vacuum chamber **10,** on holder **14** placed (e.g., 10 to 12 cm) above crucible **18** loaded with wax **16** (e.g., 40-50 mg of wax). Vacuum (e.g., of about 10$^{-4}$ mbars) is generated in the chamber. The wax is evaporated at a crucible temperature of about 200 °C by applying pulses of an electrical current. After evaporation, the specimens are placed at different temperatures, ranging between 90 °C and deep freeze (-30 °C).

In exemplary procedures, films were prepared by depositing the following waxes: n-alkane hexatriacontane paraffin wax (C$_{36}$H$_{74}$), tetracontane paraffin wax (C$_{40}$H$_{82}$), tetratetracontane paraffin wax (C$_{44}$H$_{90}$) and pentacontane paraffin wax (C$_{50}$H$_{102}$), on different substrates. A tested wax was deposited by thermal evaporation via a Bio-Rad Polaron Division Coating System on the following substrates: 200 nm gold films modified with 1-undecanethiol (CH$_3$(CH$_2$)$_{10}$SH) SAMs, (100) silicon wafers, and microscope glass slides. The samples were placed in a vacuum chamber at 10$^{-4}$ mbar on a holder placed 10 to 12 cm above a crucible loaded with 40 to 50 mg of the selected wax. The wax was evaporated at a crucible temperature of about 200 °C by applying pulses of an electrical current. After evaporation, the specimens were placed at different temperatures: 25 °C (room temperature (R.T.)), 4 °C (refrigerator), -30 °C (deep-freeze), and 40 °C (MRC-1410DIG oven, in air).

In additional exemplary procedures, films were prepared by depositing the following fluorinated waxes: perfluorotetracosane (CF$_3$(CF$_2$)$_{22}$CF$_3$) and perfluoroeicosane (CF$_3$(CF$_2$)$_{18}$CF$_3$) on the following substrates: (100) Si wafers, microscope glass slides, 200 nm gold films deposited on Si wafers and stainless steel. The samples were placed in a vacuum chamber at $10^{-4}$ mbar on a holder placed 10 to 12 cm above a crucible loaded with 40 to 50 mg of the fluorinated wax. The fluorinated wax was evaporated at a crucible temperature of about 200 °C by applying pulses of an electrical current.

## EXAMPLE 2

### SAMPLE CHARACTERIZATION OF THERMALLY-EVAPORATED WAXES

#### Material and Methods

#### XRD Measurements:

Structural and microstructural characterization of non-fluorinated wax powders and crystalline thin films was performed by means of XRD with a Cu anode sealed tube (Philips PW 3710 X-Ray Diffractometer).

Structural and microstructural characterization of fluorinated wax powders and crystalline thin films, after deposition of the substrate, was performed by means of XRD with a Cu anode sealed tube (Rigaku, SmartLab, X-Ray Diffractometer).

Time-resolved X-ray measurements were performed on the non fluorinated wax-coated samples for the duration of 3 days at 1 hour intervals with a Cu anode sealed tube (Philips PW 3710 X-Ray Diffractometer).

The calibration of the peak position was performed by using the position of the substrate (e.g., single-crystal silicon substrate and/or the gold layer). The peak shift corresponds to a relaxation of an initial compressive strain due to the deposition. Since thermal evaporation of thin films at room temperature introduces strains into the films, the strain, $\varepsilon$, was calculated from the shift of the diffraction peak using the following equation:

$$\varepsilon = (d_{\mathrm{m}} - d_0)/d_0,$$

where $d_{\mathrm{m}}$ and $d_0$ are the measured d-spacing and the unstrained d-spacing, respectively [Pokroy, B. et al. Nat. Mater. 2004, 4, 900].

Crystallite size was determined from the broadening of the XRD diffraction peaks (i.e. the size of coherently scattering blocks) and was calculated according to the following equation:

$$L = 2d(\tan\theta_{\mathrm{B}})/W_{\mathrm{L}}$$

where $W_{\mathrm{L}}$ is the Lorentzian width of the diffraction peak, $d$ is the d-spacing that correlates to the diffraction peak, and $\theta_{\mathrm{B}}$ is the Bragg diffraction angle.

The percentage of preferred orientation of a film was determined using the March-Dollase method, according to the following equation:

$$\eta = 100\%[(1-r)^3/(1-r^3)]^{1/2}$$

where $r = [\sin^2\alpha/((\kappa/\kappa p)^{2/3} - \cos^2\alpha)]^{1/3}$; $\alpha$ is the angle between the plane of preferred orientation and a comparison plane, and $k$ and $kp$ are the observed and random powder intensity ratios between the two planes under consideration, respectively.

The mechanism underlying non-fluorinated wax crystals growing was examined at room temperature by performing *in situ* XRD over 50 hours at room temperature and repeated the time-dependent wetting and roughness testing for samples that were maintained at various temperatures (R.T., -30 °C, 4 °C, and 40 °C).

Time resolved *in situ* XRD measurements were performed also on perfluorotetracosane ($CF_3(CF_2)_{22}CF_3$) coated samples, maintained at elevated temperature of 90 °C for a duration of 60 hours with time intervals of 1 hour, via Rigaku, SmartLab, X-Ray Diffractometer.

#### SEM measurements:

Surface imaging was performed using scanning electron microscopy (SEM; FEI E-SEM Quanta 200).

High resolution SEM (HR-SEM; Zeiss Ultra plus HR-SEM) and optical (Olympus BX51 microscope and Olympus equipped with an Olympus SC30 camera) microscopy images were recorded at different times after deposition.

*Contact Angle Measurements:*

The wettability of the surfaces was characterized using water contact angle (C.A.) measurements recorded with an Attension Theta tensiometer. The water wettability measurements were performed with a constant high-purity water drop volume of 7 $\mu$L.

Oil contact angles were determined for the following liquids: Glycerol, ethylene glycol, olive oil, benzyl chloride, clorobenzene, cyclohexane and hexadecane, , using an Attension Theta tensiometer with approximately 8 $\mu$L liquid drops.

Time-dependent contact angle measurements were performed during a period of two weeks.

*Roughness Measurements:*

Confocal microscopy (Leica DCM3D) was used for roughness measurements. Time-dependent measurements were performed on counterpart samples having non-fluorinated wax coatings that were used for XRD time-dependent measurements. *In situ* time-resolved confocal microscopy was used for observation of the change in surface roughness over a constant 100 $\mu$m $\times$ 100 $\mu$m area for duration of 160 hours. A topographical image was collected every hour. These experiments encompassed the same duration and time intervals as the time-dependent XRD measurements hereinabove.

Similar time-dependent measurements were performed for samples coated with fluorinated wax, maintained at a temperature of 90 °C, during 60 hours. These experiments were supported by time-dependent XRD measurements performed at 90 °C during 60 hours, with 1 hour time intervals.

*Experimental Results*

*XRD Measurements:*

As can be seen in Figure 2A, XRD measurements have demonstrated a highly preferred orientation of the exemplary $C_{24}F_{50}$ fluorinated wax film deposited on Si and Au substrates. Similar results were obtained upon thermal evaporation of the fluorinated wax on a glass substrate (data not shown). This preferred orientation was observed immediately after thermal evaporation of the fluorinated wax. As shown in Figure 2B, the preferred orientation remained stable over time in samples maintained at room temperature for 2 weeks. For reference, Figure 2C demonstrate the strongly preferred orientation observed in various surfaces have thermally evaporated paraffin deposited therein.

*SEM measurements:*

Figures 3A-B present HR-SEM images, taken immediately after deposition, of a silicon substrate (Figure 3A) and Au substrate (gold films deposited via PVD on Si wafers; Figure 3B) having thermally evaporated $CF_3(CF_2)_{22}CF_3$ applied thereon. As shown in Figures 3A and 3B, a strongly faceted array of distinct single crystal platelets of the fluorinated wax was observed on both substrates. These platelets are about 100-150 nm and seem to be mostly standing perpendicular to the substrate. Such platelets were observed also a glass substrate having thermally-evaporated $CF_3(CF_2)_{22}CF_3$ applied thereon (data not shown).

Maintaining the coated samples at elevated temperatures resulted in moderate crystal growth. As exemplified in Figures 4A and 4B, upon maintaining a silicon substrate having thermally-evaporated $CF_3(CF_2)_{22}CF_3$ applied thereon at 90 °C for 40 hours, the single crystal platelets are 125-180 nm thick. As further exemplified in Figure 4C, maintaining a silicon substrate having thermally-evaporated $CF_3(CF_2)_{22}CF_3$ applied thereon at 70 °C for 30 hours, also resulted in crystal growth. Fir reference, Figure 4D presents a sample of a silicon substrate having thermally-evaporated $CF_3(CF_2)_{22}CF_3$ applied thereon, which was maintained at room temperature.

*Contact Angle:*

Table 1 presents the contact angles as observed for different liquids on the surface of a Silicon substrate having applied thereon a thermally-evaporated paraffin ($C_{36}H_{74}$ (C36), $C_{40}H_{82}$ (C40), $C_{44}H_{90}$ (C44)and $C_{50}H_{102}$ (C50)) and fluorinated waxes (perfluorotetracosane ($CF_3(CF_2)_{22}CF_3$; C24) and perfluoroeicosane ($CF_3(CF_2)_{18}CF_3$); C20).

**Table1**

| Solvent | C.A. Fluorinated | | C.A. paraffin | | | |
|---|---|---|---|---|---|---|
| | C24 | C20 | C36 | C40 | C44 | C50 |
| Water | 172 | 128 | 171 | 167 | 161 | 151 |
| Glycerol | 172 | 120 | 133 | 144 | 130 | 111 |
| Ethylene Glycol | 171 | 122 | 121 | 112 | 103 | 100 |
| Benzyl Chloride | 139 | Fully wetted | Fully wetted | | | |
| Clorobenzene | 138 | Fully wetted | Fully wetted | | | |
| Cyclohexane | 112 | Fully wetted | Fully wetted | | | |
| hexadecane | 112 | Fully wetted | Fully wetted | | | |

Figure 3A (Insert) presents an image demonstrating the high contact angle of olive oil drop on a silicon substrate having applied thereon a thermally-evaporated perfluorotetracosane ($CF_3(CF_2)_{22}CF_3$).

As can be seen in the data presented in Table 1, superhydrophobicity of surfaces having applied thereon thermally-evaporated waxes (fluorinated and non-fluorinated) featuring more than 20 carbon atoms is superior to that obtained for waxes having 20 carbon atoms.

As can further be seen in Table 1, surfaces having applied thereon thermally evaporated fluorinated waxes having more than 20 carbon atoms (e.g., 24 carbon atoms) exhibit substantially superior oleophobicity, compared to both non-fluorinated waxes and fluorinated waxes having 20 carbon atoms).

*Re-Crystallization after deposition:*

*Roughness:*

RMS roughness measurements were performed for silicon substrates having thermally-evaporated $CF_3(CF_2)_{22}CF_3$ applied thereon, maintained at various temperatures. The obtained data indicated temperature-dependent surface roughening. The fastest roughening rate was observed at 90 °C (0.78 Tm, Tm=461K). The most significant growth was also observed upon maintaining the samples at 90 °C (about 0.4 $\mu$m), compared to about 0.08 $\mu$m upon 20 hours at 80 °C and to about 0.06 $\mu$m upon 20 hours at 70 °C. When samples maintained at 90 °C were placed back at 25 °C the growth was significantly decreased (data not shown).

Figures 5A-5C presents the RMS roughness of a silicon substrate upon thermally evaporating thereon an exemplary fluorinated wax, $CF_3(CF_2)_{22}CF_3$, and maintaining the sample at 90 °C, 70 °C and 80 °C, respectively, as measured by confocal microscopy during 60 hours post deposition.

As shown in Figures 5A-C, a two-step roughening process can be observed: the first rapid step occurs during the first 20 hours, and the second, moderate roughening occurs during the next 30 hours. Further heating results with a slight decrease of surface roughness due to wax evaporation (data not shown).

During the above-suggested second stage of the roughness process, where moderate crystal growth takes place, initiation of material loss due to evaporation also occurs, as can be observed, for example, in Figure 4A, in the form of cavities in which are assumed to contribute to the increase of roughness yet are small enough comparing to the liquid drops and do not harm the wetting properties).

It was further found that the average crystallite size of the as deposited sample was 93 nm and after 20 hours at 90 °C grew to 100 nm, the average crystallite size decreased to 90 nm after 60 hours at 90 °C In order to obtain the Lorentzian contribution to the diffraction peak fitted the peak profile was fitted to a Voigt function, which is a convolution of a Gaussian and a Lorentzian (Pokroy, B. et al. Nat. Mater. 2004, 4, 900). The decrease of the crystallite size after long heating is another evidence to wax evaporation.

*Contact angle:*

Time-dependent contact angle measurements were performed by measuring the contact angle of water, glycerol, ethylene glycol and hexadecane on a silicon wafer substrate having perfluorotetracosane ($CF_3(CF_2)_{22}CF_3$) thermally evaporated thereon, maintained at room temperature for a two-week period. The obtained data have shown a slight variation of the measured contact angles, which accord the roughness measurements performed during the same time period.

Additional time-dependent contact angle measurements were performed on samples maintained at 90 °C. The results are presented at Table 2.

**Table 2**

| Solvent | C.A. | | | | | | |
|---|---|---|---|---|---|---|---|
| | 18hr | 20 hr | 22 hr | 30 hr | 40 hr | 50 hr | 60 hr |
| Water | 160 | 165 | 161 | 168 | 168 | 163 | 167 |
| Glycerol | 163 | 164 | 165 | 167 | 167 | 163 | 166 |
| Ethylene Glycol | 167 | 159 | 155 | 160 | 156 | 161 | 166 |
| Hexadecane | 122 | 115 | 118 | 119 | 124 | 123 | 117 |

As can be seen in Table 2, no significant change was observed in the measured contact angles over time.

*Confocal measurements:*

Confocal measurements demonstrated an insignificant crystal growth over time, in samples maintained at room temperature during several weeks. Crystal growth was observed in samples maintained at elevated temperatures (70, 80 and 90 °C), which was in accord a corresponding increase in the surface roughness (R.M.S.), from initial 0.7 $\mu$m to 0.9 $\mu$m at 90 °C (0.78 Tm) after a 60 hour time period.

*HRSEM measurements:*

Time-dependent HRSEM revealed the growth of strongly faceted single crystal platelets of the fluorinated wax.
As can be seen in Figures 4A-4C, maintaining samples of thermally-evaporated fluorinated was at elevated temperature resulted in spaced single crystal platelets. It is noted that although crystal growth typically imparts an increase of surface roughness, the low crystal density observed results in minor contribution to the increase of oleophobicity, as can be seen in table 2.
It is to be further noted that, as can be seen in Figure 6A, a thermally evaporated non-fluorinated wax exhibited a high crystal density. Nonetheless, and as shown in Table 1, the oleophobicity of such surfaces was substantially inferior to that of the fluorinated wax-coated surfaces.

*EXAMPLE 3*

*ANTIBACTERIAL ACTIVITY*

*Materials and Experimental Methods*

*Bacillus cereus* 407 and ATCC 10987 stains were obtained from Michel Gohar's lab collection (INRA, France).
*Pseudomonas aeruginosa* PA14 was obtained from Shlomo Sela's lab strain collection (Agricultural Research Organization, Israel).
For biofilm generation, bacteria were grown to stationary phase in LB (Lysogeny broth) medium at 37 °C in shaking culture. The generated cultures were seeded (by dilution 1:100) into sterile polystyrene multidishes containing different substrates and inoculated into fresh media (37 °C, 5 95 % air/5 % $CO_2$ (v/v) statically without agitation.
To visualize the constructed biofilms, the substrates were removed from the wells, washed with PBS buffer and stained with FilmTracerTM LIVE/DEAD Biofilm Viability Kit (Molecular Probes, OR) according to the manufacturer's protocol. The stained samples were observed using an Olympus IX81 confocal laser scanning microscope (CLSM, Japan). Live cells were stained green, while dead cells were stained red. Fluorescence emission of the stained samples was measured using an Olympus IX81 CLSM equipped with 488-nm argon-ion and 543-nm helium-neon lasers.

*Results*

Two different biofilm forming pathogenic bacteria, *B. cereus* (Gram positive) and *P. aeruginosa* (Gram negative), which are often encountered in clinical and industrial settings, were tested for their ability to form biofilm on glass substrates having thermally evaporated thereon the following wax materials: $C_{24}F_{50}$, $C_{36}H_{74}$, $C_{40}H_{82}$ and $C_{44}H_{90}$.

The obtained data are presented in Figures 7A-E (for *B. cereus* biofilm formation) and Figure 8A-E (for *P. aeruginosa* biofilm formation).

As can been in Figures 7A-E, the cells of *B. cereus* could not adhere successfully to form confluent biofilms on substrates coated with $C_{24}F_{50}$, $C_{40}H_{82}$ and $C_{44}H_{90}$ in comparison to control glass surface. Less significant inhibition of biofilm formation was observed on substrate coated with $C_{36}H_{74}$.

As can be seen in Figures 8A-E, substrates coated with $C_{24}F_{50}$ and $C_{44}H_{90}$ substantially prevented the biofilm formation by *P. aeruginosa*.

It becomes increasingly clear that most of the bacteria in nature exist as surface associated matrix enclosed biofilms. Bacteria are much protected from environmental insults and from various antimicrobial treatments in the biofilm mode of growth. Since there is no efficient technology to solve the biofilm problem up until now, the data presented herein is of highest importance for the field of microbiology.

The substrates presented herein can therefore be used to modify any industrial or clinical surface to prevent bacterial colonization and biofilm formation.

***EXAMPLE 4***

***SPRAY-COATED AND DIP-COATED WAXES***

***General Procedure:***

A fluorinated wax as defined herein is dissolved in a commercially available fluorinated solvent (e.g., hydrochlorofluorocarbon), at a concentration ranging from 0.05 weight percent to solubility limit or even above solubility limit (e.g., from 0.1 to 1 weight percent or from $1 \times 10^{-5}$-$1 \times 10^{-4}$ M). The obtained solution is sonicated for several (e.g., 5) minutes.

A non-fluorinated wax is dissolved in a hydrophobic organic solvent such as, for example, hexane, heptanes and/or xylene, at a concentration ranging from 0.01 to the solubility limit or exceeding the solubility limit (e.g., from 0.01 to 50 weight percents, or from 1 to 50 weight percents, or from 1 to 30 weight percents, and the obtained solution is used as is, or may be subjected to sonication if required to complete dissolution.

Spray coating is performed using a commercially available air brush with a compressed air gas supply (e.g., Badger air brush). In a typical procedure, deposition is performed for 5 seconds each cycle, with 3-6 cycled performed.

Dip coating is performed by dipping a sample in the solution for 1-100 seconds (e.g., 30-60 seconds), at room temperature and dry the coated sample in air at room temperature.

In exemplary procedures, 0.065 gram perfluoropentadecane ($CF_3(CF_2)_{13}CF_3$) was dissolved in 7 ml of the fluorinated solvent AK225, AGC Chemicals ($CF_3CF_2CHCl_2/CClF_2CF_2CHClF$); and 0.065 gram perfluorotetracosan ($CF_3(CF_2)_{22}CF_3$) was dissolved in 10 ml of the same fluorinated solvent.

The waxes $C_{36}H_{74}$, $C_{40}H_{82}$, and $C_{44}H_{90}$ were each dissolved in xylene at a concentration of 18 weight percents for $C_{36}H_{74}$ and $C_{40}H_{82}$, and of 15 weight percents for $C_{44}H_{90}$.

A Si wafer as described hereinabove was used in all experiments.

Spray coating was performed as described hereinabove, for 5 seconds x 4 cycles.

The obtained contact angles are presented in Table 3 below, and the RMS values of the obtained roughness in Table 4 below.

Contact angles and RMS roughness were measured as described in Example 2 hereinabove.

**Table 3**

| Solvent | C.A. Fluorinated | | C.A. paraffin | | |
|---|---|---|---|---|---|
| | C24 (0.1 in 10 ml solvent) | C15 (0.065 in 7 ml solvent) | C36 (18% wt in xylene) | C40 (18% wt in xylene) | C44 (15% wt in xylene) |
| Water | 141 | 114 | 75 | 85 | 96 |
| Glycerol | 140 | 110 | 64 | 69 | 96 |
| Ethylene Glycol | 100 | 59 | 58 | 62 | 60 |

**Table 4**

| | C.A. Fluorinated | | C.A. paraffin | | |
|---|---|---|---|---|---|
| | C24 (0.1 in 10 ml solvent) | C15 (0.065 in 7 ml solvent) | C36 (18% wt in xylene) | C40 (18% wt in xylene) | C44 (15% wt in xylene) |
| Roughness (RMS) | 0.12 μm | 0.12 μm | 0.07-0.1 μm | 0.06-0.09 μm | Not-determined |

These results further substantiate the superior performance of fluorinated waxes having long carbon chain (of more than 20 carbon atoms) and of non-fluorinated (paraffin-like) waxes having more than 40 carbon atoms, over shorter waxes (fluorinated and non-fluorinated).

These results further demonstrate a promising use of spray-coated and optionally dip-coated waxes in modifying any industrial or clinical surface to prevent bacterial colonization and biofilm formation.

Antibacterial and ABF activity of surfaces having spray-coated and dip-coated waxes such as those described herein is determined by assays such as described in Example 3 hereinabove.

## Claims

1. A method of inhibiting, reducing and/or retarding a biofilm formation on a surface of a substrate, the method comprising applying onto the surface a fluorinated hydrocarbon, said fluorinated hydrocarbon is perfluorotetracosane ($CF_3(CF_2)_{22}CF_3$), and said surface being selected from a glass surface, a porcelain surface, a ceramic surface, a polymeric surface, a metallic surface, and a surface which comprises silicon, an organosilicon, stainless steel, MICA, a polymer or any combination thereof.

2. The method of claim 1, wherein said biofilm is a bacterial biofilm.

## Patentansprüche

1. Verfahren zum Hemmen, Reduzieren und/oder Verzögern einer Biofilmbildung auf einer Oberfläche eines Substrats, wobei das Verfahren das Auftragen eines fluorierten Kohlenwasserstoffs auf die Oberfläche umfasst, wobei der fluorierte Kohlenwasserstoff Perfluortetracosan ($CF_3(CF_2)_{22}CF_3$) ist, und die Oberfläche aus einer Glasoberfläche, einer Porzellanoberfläche, einer Keramikoberfläche, einer Polymeroberfläche, einer Metalloberfläche und einer Oberfläche ausgewählt ist, die Silicium, ein Organosilicium, Edelstahl, MICA (Glimmer), ein Polymer oder eine beliebige Kombination davon umfasst.

2. Verfahren nach Anspruch 1, wobei der Biofilm ein bakterieller Biofilm ist.

## Revendications

1. Procédé d'inhibition, de réduction et/ou de retard de la formation d'un biofilm à la surface d'un substrat, le procédé comprenant l'application sur la surface d'un hydrocarbure fluoré, ledit hydrocarbure fluoré étant le perfluorotétracosane (CF3(CF2)22CF3) et ladite surface étant choisie parmi une surface de verre, une surface de porcelaine, une surface de céramique, une surface en polymère, une surface métallique et une surface qui comprend du silicium, un organosilicium, de l'acier inoxydable, du mica, un polymère ou toute combinaison de ceux-ci.

2. Procédé selon la revendication 1, dans lequel ledit biofilm est un biofilm bactérien.

FIG. 1

FIG. 2A

FIG. 2B

**FIG. 2C**

FIG.3A                                    FIG. 3B

FIG. 4A

FIG. 4B

FIG. 4C

FIG. 4D

FIG. 5A

FIG. 5B

FIG. 5C

FIG. 6A

FIG. 6B

FIG. 6C

FIG. 6D

FIG. 7A                                    FIG. 7B

FIG. 7C                                    FIG. 7D

FIG. 7E

FIG. 8A                              FIG. 8B

FIG. 8C                                                      FIG. 8D

FIG. 8E

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20100028604 A
- US 20090011222 A
- US 20110059307 A
- US 20110250422 A
- US 20090191397 A
- WO 2007025293 A
- WO 9818605 A
- EP 0952904 A
- US 3345202 A
- WO 2009126916 A
- WO 0153209 A
- WO 2005123851 A
- AU 2008201617

### Non-patent literature cited in the description

- **IRZH et al.** *ACS Appl. Mater. Interfaces.,* 2011, vol. 3, 4566
- **ONDA et al.** *Langmuir,* 1996, vol. 12, 2125-2127
- **BHUSHAN et al.** *Phil. Trans. R. Soc. A,* 2009, vol. 367, 1631
- **KOCH et al.** *Soft Matter.,* 2009, vol. 5, 1386
- **PECHOOK ; POKROY.** *Adv. Funct. Mater.,* 2012, vol. 22, 745
- **TUTEJA et al.** *Science,* 2007, vol. 318, 1618
- **R. O. DAROUICHE.** Preventing infection in surgical implants. *US Surgery,* 2007, vol. 40, www.touchbriefings.com/ pdf/2742/darouiche.pdf
- **YANG et al.** *J. Colloid Interface Sci.,* 2008, vol. 325, 588
- **KHALIL-ABAD et al.** *J. Colloid Interface Sci.,* 2008, vol. 351, 293
- **EPSTEIN et al.** *Proc. Natl. Acad. Sci.,* 2012, vol. 109 (33), 13182
- **JUNG ; BHUSHAN.** *Langmuir,* 2009, vol. 25 (24), 14165-14173
- **ZHANG et al.** *Macromolecules,* 1990, vol. 23 (19), 4322
- **POKROY, B. et al.** *Nat. Mater.,* 2004, vol. 4, 900